(19) Europäisches Patentamt / European Patent Office / Office européen des brevets

(11) **EP 3 584 261 A1**

(12) **EUROPEAN PATENT APPLICATION**
published in accordance with Art. 153(4) EPC


(43) Date of publication:
**25.12.2019 Bulletin 2019/52**

(21) Application number: **18754034.9**

(22) Date of filing: **19.02.2018**

(51) Int Cl.:
***C08C 19/00*** (2006.01) ***B60C 1/00*** (2006.01)
***C08F 4/52*** (2006.01) ***C08F 4/602*** (2006.01)
***C08L 7/00*** (2006.01) ***C08L 15/00*** (2006.01)

(86) International application number:
**PCT/JP2018/005807**

(87) International publication number:
**WO 2018/151300 (23.08.2018 Gazette 2018/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **20.02.2017 JP 2017029328**



(71) Applicant: **Bridgestone Corporation**
**Tokyo 104-8340 (JP)**

(72) Inventors:
- **YAMAGATA Yusuke**
  **Tokyo 104-8340 (JP)**
- **KAITA Shojiro**
  **Tokyo 104-8340 (JP)**
- **TANABE Tomoe**
  **Tokyo 104-8340 (JP)**

(74) Representative: **Oxley, Robin John George**
**Marks & Clerk LLP**
**15 Fetter Lane**
**London EC4A 1BW (GB)**


(54) **METHOD FOR PRODUCING MODIFIED CONJUGATED DIENE POLYMER, MODIFIED CONJUGATED DIENE POLYMER, RUBBER COMPOSITION AND TIRE**


(57) A method, of the present disclosure, of producing a modified conjugated diene-based polymer includes a polymerization reaction process of polymerizing a conjugated diene monomer in the presence of a polymerization catalyst composition to obtain a conjugated diene-based polymer, an organic metal compound adding process of adding an organic metal compound after the polymerization reaction process, and a modification reaction process of modifying the conjugated diene-based polymer with a modifying agent after the organic metal compound adding process. A rubber composition of the present disclosure includes a modified conjugated diene-based polymer produced by the method. A tire of the present disclosure includes the rubber composition.


*FIG. 1*

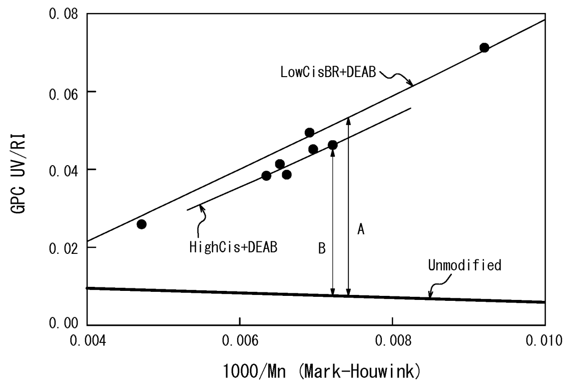


EP 3 584 261 A1

## Description

TECHNICAL FIELD

The present disclosure relates to a method of producing a modified conjugated diene-based polymer, a modified conjugated diene-based polymer, a rubber composition, and a tire.

BACKGROUND

A demand for vehicles with lower fuel consumption has been growing ever stronger in recent years with the global movement towards reduction in carbon dioxide emissions as a result of societal needs for energy conservation and increased interest in environmental issues. To respond to such demands, tires with lower rolling resistance are being sought. One method of lowering the rolling resistance of tires that has been examined is to optimize the tire structure, but the most typical method is to use material with low heat buildup as the rubber composition.

A high cis-1,4 polybutadiene, obtained by polymerization using a catalyst that includes a rare earth element, is a linear polymer that typically has few branched structures, has a high cis content as compared to conventional high cis polybutadiene, and has excellent wear resistance, heat resistance, fatigue resistance, and the like as a rubber component. Hence, a high cis-1,4 polybutadiene is used as one rubber component of the aforementioned rubber composition. For example, see patent literature (PTL) 1.

To obtain such a rubber composition with low heat buildup, many techniques have also been developed to increase the dispersibility of a filler used in the rubber composition. Among these techniques, a method of modifying an active terminal of a diene polymer, obtained by anionic polymerization using an organic lithium compound, with a functional group that interacts with the filler is becoming the most common method.

Disclosed examples of this method include (i) a method of using carbon black in the filler and modifying an active terminal of the polymer with a tin compound, and (ii) a method of similarly using carbon black and introducing an amino group into the active terminal of the polymer. For example, see PTL 2.

CITATION LIST

Patent Literature

PTL 1: JP 2013-237868 A
PTL 2: JP 2014-58651 A

SUMMARY

(Technical Problem)

A method of producing a modified conjugated diene-based polymer, however, that allows easy production of a modified conjugated diene-based polymer that has a high modification rate and a high cis-1,4 bond content, without performing complicated steps, has not yet been sufficiently developed and is in high demand.

In light of these circumstances, it is an object of the present disclosure to provide a method of producing a modified conjugated diene-based polymer that allows easy production of a modified conjugated diene-based polymer that has a high modification rate and a high cis-1,4 bond content.

Another object of the present disclosure is to provide a modified conjugated diene-based polymer that has a high modification rate and a high cis-1,4 bond content. Yet another object of the present disclosure is to provide a rubber composition that achieves the effects of the modified conjugated diene-based polymer of the present disclosure. Still another object of the present disclosure is to provide a tire that achieves the effects of the modified conjugated diene-based polymer of the present disclosure.

(Solution to Problem)

As a result of intensive study, we discovered that addition, after a polymerization reaction process, of an organic metal compound to a reaction system that includes a conjugated diene-based polymer can increase the active sites where a modification reaction is possible in the conjugated diene-based polymer.

The present disclosure advantageously solves the aforementioned problem on the basis of our findings. A

method, according to the present disclosure, of producing a modified conjugated diene-based polymer includes:

a polymerization reaction process of polymerizing a conjugated diene monomer in the presence of a polymerization catalyst composition to obtain a conjugated diene-based polymer;
an organic metal compound adding process of adding an organic metal compound after the polymerization reaction process; and
a modification reaction process of modifying the conjugated diene-based polymer with a modifying agent after the organic metal compound adding process.

(Advantageous Effect)

The present disclosure can provide a method of producing a modified conjugated diene-based polymer that allows easy production of a modified conjugated diene-based polymer that has a high modification rate and a high 1,4-cis bond content.

The present disclosure can also provide a modified conjugated diene-based polymer that has a high modification rate and a high 1,4-cis bond content. The present disclosure can also provide a rubber composition that achieves the effects of the modified conjugated diene-based polymer of the present disclosure. The present disclosure can also provide a tire that achieves the effects of the modified conjugated diene-based polymer of the present disclosure.

BRIEF DESCRIPTION OF THE DRAWINGS

In the accompanying drawings:

FIG. 1 is a graph illustrating an example of a calibration curve for calculating the terminal modification rate of the modified conjugated diene-based polymer of the present disclosure.

DETAILED DESCRIPTION

The following describes a method of producing a modified conjugated diene-based polymer, a modified conjugated diene-based polymer, a rubber composition, a crosslinked rubber composition, and a tire of the present disclosure in detail on the basis of embodiments thereof.

(Method of Producing Modified Conjugated Diene-Based Polymer)

The method of producing a modified conjugated diene-based polymer according to an embodiment of the present disclosure (method of producing a modified conjugated diene-based polymer according to an embodiment) includes at least a polymerization reaction process, an organic metal compound adding process, and a modification reaction process. The method may, as necessary, include a monomer preparation process, a catalyst system preparation process, a cooling process, and other processes.

<Polymerization Reaction Process>

The polymerization reaction process is a process of polymerizing a conjugated diene monomer in the presence of a polymerization catalyst composition to obtain a conjugated diene-based polymer.

Examples of the polymerization catalyst composition are described below in detail.

-First Polymerization Catalyst Composition-

The first polymerization catalyst composition needs to include the following.

- a rare earth element compound (component (A-1)), and
- cyclopentadiene or the like (at least one selected from the group consisting of substituted or unsubstituted cyclopentadiene, indene, and fluorene) (component (B-1))

The first polymerization catalyst composition may further include one or more of the following.

- an organic metal compound (component (C)),
- an aluminoxane compound (component (D)),

- a halogen compound (component (E)), and
- an ionic compound (component (F))

The first polymerization catalyst composition preferably has high solubility in aliphatic hydrocarbons and preferably becomes a homogenous solution in aliphatic hydrocarbons. Examples of aliphatic hydrocarbons include hexane, cyclohexane, and pentane.
The first polymerization catalyst composition preferably does not include an aromatic hydrocarbon. Examples of the aromatic hydrocarbon include benzene, toluene, and xylene.
Here, "does not include an aromatic hydrocarbon" refers to the ratio of aromatic hydrocarbons included in the polymerization catalyst composition being less than 0.1 wt.%.
The first polymerization catalyst composition may optionally include the ionic compound (component (F)) described below. The ionic compound has high solubility in aromatic hydrocarbons and low solubility in aliphatic hydrocarbons. Therefore, non-inclusion of ionic compounds in the polymerization catalyst composition allows production of the modified conjugated diene-based polymer while further reducing production costs and the burden on the environment.
Here, "does not include an ionic compound" refers to the ratio of ionic compounds included in the polymerization catalyst composition being less than 0.01 wt.%.

-Second Polymerization Catalyst Composition-

The second polymerization catalyst composition needs to include the following.

- a rare earth element compound (component (A-1)),
- cyclopentadiene or the like (component (B-1)), and
- an ionic compound (component (F))

The second polymerization catalyst composition may further include one or more of the following.

- an organic metal compound (component (C)), and
- a halogen compound (component (E))

-Third Polymerization Catalyst Composition-

The third polymerization catalyst composition needs to include the following.

- a rare earth element compound (component (A-1))

The third polymerization catalyst composition may further include one or more of the following.

- an organic metal compound (component (C)),
- an aluminoxane compound (component (D)),
- a halogen compound (component (E)), and
- an ionic compound (component (F))

-Fourth Polymerization Catalyst Composition-

The fourth polymerization catalyst composition needs to include the following.

- a rare earth element compound (component (A-1)),
- at least one of an ionic compound (component (F)) and a halogen compound (component (E)), and
- an organic metal compound (component (C))

The fourth polymerization catalyst composition may further include one or more of the following.

- an anionic tridentate ligand precursor (component (B-2)), and
- an aluminoxane compound (component (D))

-Fifth Polymerization Catalyst Composition-

The fifth polymerization catalyst composition needs to include the following.

- at least one complex selected from the group consisting of a metallocene complex represented by general formula (X), a metallocene complex represented by general formula (Y), and a half metallocene cation complex represented by general formula (Z) (component (A-2))

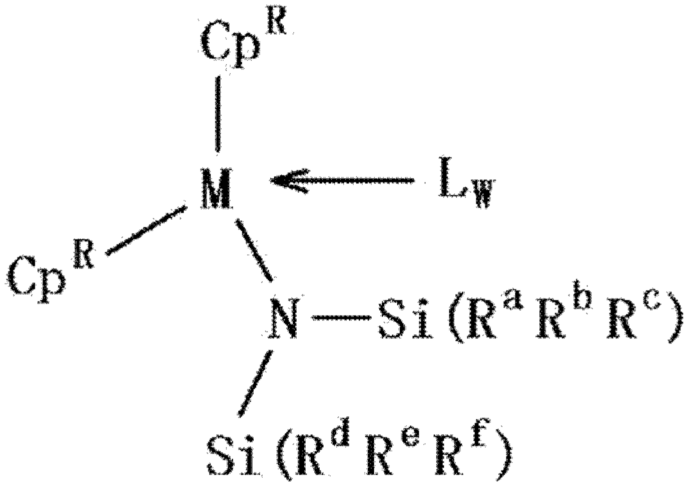

· · · (X)

(Here, M represents a lanthanoid element, scandium, or yttrium; each $Cp^R$ independently represents unsubstituted or substituted indenyl; $R^a$ to $R^f$ independently represent a hydrogen atom or an alkyl group having 1 to 3 carbon atoms; L represents a neutral Lewis base; and w represents an integer of 0 to 3.)

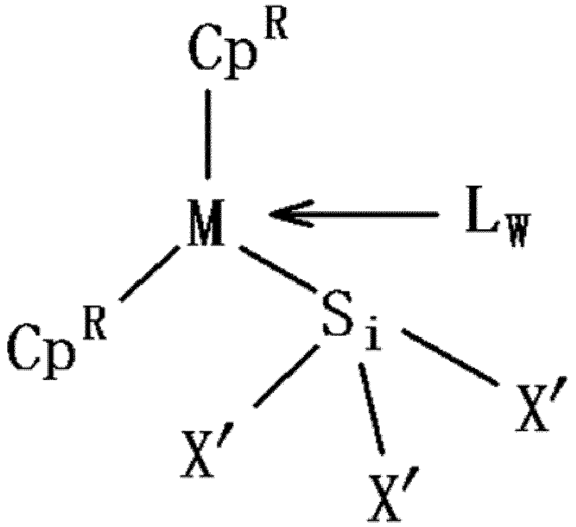

· · · (Y)

(Here, M represents a lanthanoid element, scandium, or yttrium; each $Cp^R$ independently represents unsubstituted or substituted indenyl; each X' represents a hydrogen atom, a halogen atom, an alkoxide group, a thiolate group, an amide group, a silyl group, or a hydrocarbon group having 1 to 20 carbon atoms; L represents a neutral Lewis base; and w represents an integer of 0 to 3.)

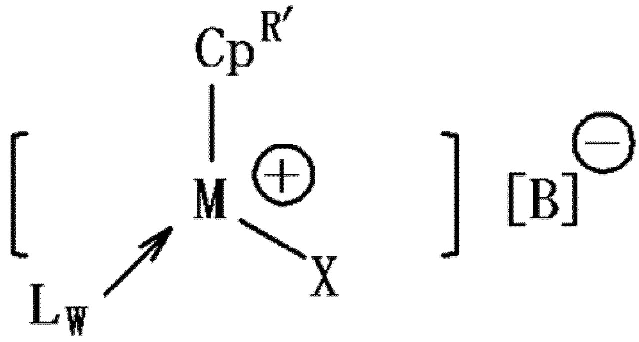

· · · (Z)

(Here, M represents a lanthanoid element, scandium, or yttrium; $Cp^{R'}$ represents unsubstituted or substituted cyclopentadienyl, indenyl, or fluorenyl; X represents a hydrogen atom, a halogen atom, an alkoxide group, a thiolate group, an amide group, a silyl group, or a hydrocarbon group having 1 to 20 carbon atoms; L represents a neutral Lewis base; w represents an integer of 0 to 3; and $[B]^-$ represents a non-coordinating anion.)

The fifth polymerization catalyst composition may further include one or more of the following.

- an organic metal compound (component (C)),
- an aluminoxane compound (component (D)),
- a halogen compound (component (E)), and
- an ionic compound (component (F))

The above-described polymerization catalyst compositions preferably include an organic metal compound (component (C)). Inclusion of component (C) can further improve the modification rate of the modified conjugated diene-based polymer that is produced.

Each of the components (A-1) to (F) is described below.

--Rare Earth Element Compound (Component (A-1))--

Component (A-1) can be a compound containing a rare earth element or a reaction product of a reaction between such a compound and a Lewis base.

Examples of the compound containing a rare earth element include compounds that contain scandium, yttrium, or lanthanoid elements constituted by elements with an atomic number of 57 to 71. Specifically, lanthanoid elements are lanthanum, cerium, praseodymium, neodymium, promethium, samarium, europium, gadolinium, terbium, dysprosium, holmium, erbium, thulium, ytterbium, and lutetium.

Examples of the Lewis base include tetrahydrofuran, diethyl ether, dimethylaniline, trimethylphosphine, lithium chloride, neutral olefins, and neutral diolefins.

The compound containing a rare earth element or the reaction product of a reaction between the compound and a Lewis base preferably does not have a bond between the rare earth element and carbon. When the reaction product of a reaction between the compound containing a rare earth element and a Lewis base does not have a rare earth element-carbon bond, the reaction product is stable and is easy to handle.

These components (A-1) may be used alone or in a combination of two or more types.

Examples of component (A-1) include compounds represented by general formula (S1).

$$M\text{-}(NQ^1)(NQ^2)(NQ^3) \ldots \qquad (S1)$$

(Here, M represents at least one element selected from the group consisting of scandium, yttrium, and lanthanoid elements; $NQ^1$, $NQ^2$, and $NQ^3$ represent the same or different amide groups; and 3 M-N bonds are present.)

With this configuration, component (A-1) can be a component having 3 M-N bonds. Each bond is chemically equivalent, stabilizing the structure of the compound and facilitating handling.

Furthermore, this configuration can further increase the catalytic activity in the reaction system. Therefore, the reaction time can be further shortened, and the reaction temperature can be further increased.

M is preferably gadolinium, in particular to increase the catalytic activity and the reaction controllability.

Examples of the amide group represented by $NQ^1$, $NQ^2$, and $NQ^3$ include aliphatic amide groups such as a dimethyl amide group, a diethyl amide group, and a diisopropyl amide group; arylamide groups such as a phenyl amide group, a 2,6-di-tert-butylphenyl amide group, a 2,6-diisopropylphenyl amide group, a 2,6-dineopentylphenyl amide group, a 2-tert-butyl-6-isopropylphenyl amide group, a 2-tert-butyl-6-neopentylphenyl amide group, a 2-isopropyl-6-neopentylphenyl amide group, and a 2,4,6-tert-butylphenyl amide group; and bistrialkylsilyl amide groups such as a bistrimethylsilyl amide group. A bistrimethylsilyl amide group is particularly preferable in terms of solubility in aliphatic hydrocarbons. These amide groups may be used alone or in a combination of two or more types.

--Metallocene Complex or the Like (Component (A-2))--

The metallocene complex or the like (component (A-2)) needs to include at least one complex selected from the group consisting of metallocene complexes represented by general formula (X), metallocene complexes represented by general formula (Y), and half metallocene cation complexes represented by general formula (Z).

The metallocene complex is a complex compound in which two or more cyclopentadienyl groups, or derivatives thereof, are bonded to a central metal. The half metallocene cation complex is a complex compound in which one cyclopentadienyl group, or a derivative thereof, is bonded to a central metal.

In the metallocene complex represented by the general formulas (X) and (Y), $Cp^R$ represents unsubstituted or substituted indenyl. $Cp^R$ having an indenyl ring as a basic skeleton is represented by $C_9H_{7-X}R_X$ or $C_9H_{11-X}R_X$. Here, X represents an integer of 0 to 7 or 0 to 11. Furthermore, each R preferably independently represents a hydrocarbyl group or a metalloid group. The hydrocarbyl group preferably has 1 to 20 carbon atoms, more preferably 1 to 10 carbon atoms, and still more preferably 1 to 8 carbon atoms. Preferred specific examples of the hydrocarbyl group include a methyl group, an ethyl group, a phenyl group, and a benzyl group. Examples of the metalloid in the metalloid group include germyl (Ge), stannyl (Sn), and silyl (Si). In addition, the metalloid group preferably has a hydrocarbyl group, and the hydrocarbyl group is preferably similar to the hydrocarbyl group described above. Specific examples of the metalloid group include a trimethylsilyl group. Specific examples of the substituted indenyl include 2-phenyl indenyl and 2-methyl indenyl. The two $Cp^R$ in general formulas (X) and (Y) may be the same or different.

In the half metallocene cation complex represented by the general formula (Z), $Cp^{R'}$ represents unsubstituted or substituted cyclopentadienyl, indenyl or fluorenyl. Among these, unsubstituted or substituted indenyl is preferable. $Cp^{R'}$ having a cyclopentadienyl ring as a basic skeleton is represented by $C_5H_{5-X}R_X$. Here, X represents an integer of 0 to 5. Furthermore, each R preferably independently represents a hydrocarbyl group or a metalloid group. The hydrocarbyl group preferably has 1 to 20 carbon atoms, more preferably 1 to 10 carbon atoms, and still more preferably 1 to 8 carbon atoms. Preferred specific examples of the hydrocarbyl group include a methyl group, an ethyl group, a phenyl group, and a benzyl group. Examples of the metalloid in the metalloid group include germyl (Ge), stannyl (Sn), and silyl (Si). In addition, the metalloid group preferably has a hydrocarbyl group, and the hydrocarbyl group is preferably similar to the hydrocarbyl group described above. Specific examples of the metalloid group include a trimethylsilyl group. $Cp^{R'}$ having a cyclopentadienyl ring as a basic skeleton is specifically exemplified as follows.

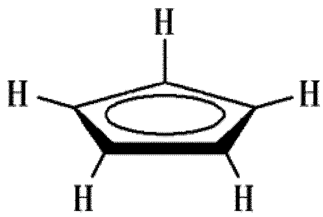
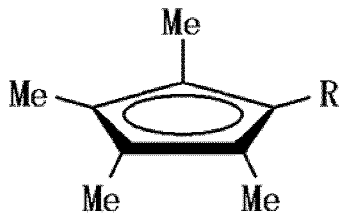

(Here, R represents a hydrogen atom, a methyl group, or an ethyl group.)

In general formula (Z), $Cp^{R'}$ having an indenyl ring as a basic skeleton is defined in the same way as $Cp^R$ in general formula (X), and preferred examples thereof are also the same.

In general formula (Z), $Cp^{R'}$ that has the fluorenyl ring as a basic skeleton may be represented by $C_{13}H_{9-X}R_X$ or $C_{13}H_{17-X}R_X$. Here, X represents an integer of 0 to 9 or 0 to 17. Furthermore, each R preferably independently represents a hydrocarbyl group or a metalloid group. The hydrocarbyl group preferably has 1 to 20 carbon atoms, more preferably 1 to 10 carbon atoms, and still more preferably 1 to 8 carbon atoms. Preferred specific examples of the hydrocarbyl group include a methyl group, an ethyl group, a phenyl group, and a benzyl group. Examples of the metalloid in the metalloid group include germyl (Ge), stannyl (Sn), and silyl (Si). In addition, the metalloid group preferably has a hydrocarbyl group, and the hydrocarbyl group is preferably similar to the hydrocarbyl group described above. Specific examples of the metalloid group include a trimethylsilyl group.

The central metal M in general formulas (X), (Y), and (Z) is a lanthanoid element, scandium, or yttrium. Lanthanoid elements include 15 elements with atomic numbers 57 to 71, and the aforementioned lanthanoid element may be any one of them. Preferred examples of the central metal M include samarium (Sm), neodymium (Nd), praseodymium (Pr), gadolinium (Gd), cerium (Ce), holmium (Ho), scandium (Sc), and yttrium (Y).

The metallocene complex represented by general formula (X) includes a silyl amide ligand $[-N(SiR_3)_2]$. Each of the R groups ($R^a$ to $R^f$ in general formula (X)) included in the silyl amide ligand independently represents a hydrogen

atom or an alkyl group having 1 to 3 carbon atoms. At least one of $R^a$ to $R^f$ preferably represents a hydrogen atom. With at least one of $R^a$ to $R^f$ representing a hydrogen atom, the catalyst can be synthesized with ease, and the steric hinderance of the silyl amide ligand decreases, allowing a conjugated diene monomer to be coordinated to the central metal M selectively from the silyl amide ligand side. A methyl group is preferred as the alkyl group.

The metallocene complex represented by general formula (Y) includes a silyl ligand [$-SiX'_3$]. X' in the silyl ligand [$-SiX'_3$] is a group defined in the same way as X in general formula (Z) described below, and preferred groups are also the same.

In general formula (Z), X represents a group selected from the group consisting of a hydrogen atom, a halogen atom, an alkoxide group, a thiolate group, an amide group, a silyl group, and a hydrocarbon group having 1 to 20 carbon atoms. Examples of the alkoxide group include aliphatic alkoxy groups such as a methoxy group, an ethoxy group, a propoxy group, an n-butoxy group, an isobutoxy group, a sec-butoxy group, and a tert-butoxy group; and aryl oxide groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group. Among these groups, the 2,6-di-tert-butylphenoxy group is preferred.

Examples of the thiolate group represented by X in general formula (Z) include aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group. Among these groups, the 2,4,6-triisopropylthiophenoxy group is preferred.

Examples of the amide group represented by X in general formula (X) include aliphatic amide groups such as a dimethyl amide group, a diethyl amide group, and a diisopropyl amide group; arylamide groups such as a phenyl amide group, a 2,6-di-tert-butylphenyl amide group, a 2,6-diisopropylphenyl amide group, a 2,6-dineopentylphenyl amide group, a 2-tert-butyl-6-isopropylphenyl amide group, a 2-tert-butyl-6-neopentylphenyl amide group, a 2-isopropyl-6-neopentylphenyl amide group, and a 2,4,6-tert-butylphenyl amide group; and bistrialkylsilyl amide groups such as a bistrimethylsilyl amide group. Among these groups, the bistrimethylsilyl amide group is preferred.

Examples of the silyl group represented by X in general formula (Z) include a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group. Among these groups, the tris(trimethylsilyl)silyl group is preferred.

In general formula (Z), the halogen atom represented by X may be any one of a fluorine atom, a chlorine atom, a bromine atom, and an iodine atom, with the chlorine atom and the bromine atom being preferred. Examples of the hydrocarbon group having 1 to 20 carbon atoms represented by X include linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group; and hydrocarbon groups containing a silicon atom, such as a trimethylsilylmethyl group and a bistrimethylsilylmethyl group. Among these groups, the methyl group, the ethyl group, the isobutyl group, the trimethylsilylmethyl group, and the like are preferred.

In general formula (Z), X is preferably the bistrimethylsilyl amide group or the hydrocarbon group having 1 to 20 carbon atoms.

In general formula (Z), examples of the non-coordinating anion represented by $[B]^-$ include tetravalent boron anions. Examples of tetravalent boron anions include tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and tridecahydride-7,8-dicarbaundecaborate. Among these, tetrakis(pentafluorophenyl)borate is preferred.

The metallocene complexes represented by general formulas (X) and (Y) and the half metallocene cation complexes represented by general formula (Z) may further include 0 to 3, preferably 0 or 1, neutral Lewis bases L. Examples of the neutral Lewis base L include tetrahydrofuran, diethyl ether, dimethylaniline, trimethylphosphine, lithium chloride, neutral olefins, and neutral diolefins. When the complex includes a plurality of neutral Lewis bases L, the neutral Lewis bases L may be the same or different.

The metallocene complexes represented by general formulas (X) and (Y) and the half metallocene cation complex represented by general formula (Z) may be present as a monomer, a dimer, or a multimer.

The metallocene complexes represented by general formula (X) can be obtained by, for example, reacting a lanthanoid trishalide, a scandium trishalide, or a yttrium trishalide with a salt of indenyl (for example, a potassium salt or a lithium salt) and a salt of bis(trialkylsilyl)amide (for example, a potassium salt or a lithium salt) in a solvent. It suffices for the reaction temperature to be approximately room temperature, and thus the complex can be produced under mild conditions. Furthermore, the reaction time is arbitrary and may be set approximately between several hours and several

tens of hours. The reaction solvent, which is not restricted, is preferably a solvent that dissolves the raw material and the product. Toluene, for example, may be used. A reaction example for obtaining a metallocene complex represented by general formula (X) is illustrated below.

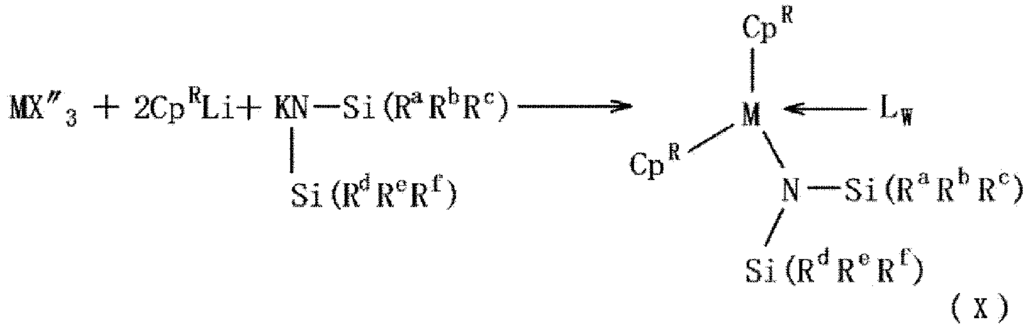

(X)

(Here, X" represents a halide.)

The metallocene complexes represented by general formula (Y) can be obtained by, for example, reacting a lanthanoid trishalide, a scandium trishalide, or a yttrium trishalide with a salt of indenyl (for example, a potassium salt or a lithium salt) and a salt of silyl (for example, a potassium salt or a lithium salt) in a solvent. It suffices for the reaction temperature to be approximately room temperature, and thus the complex can be produced under mild conditions. Furthermore, the reaction time is arbitrary and may be set approximately between several hours and several tens of hours. The reaction solvent, which is not restricted, is preferably a solvent that dissolves the raw material and the product. Toluene, for example, may be used. A reaction example for obtaining a metallocene complex represented by general formula (Y) is illustrated below.

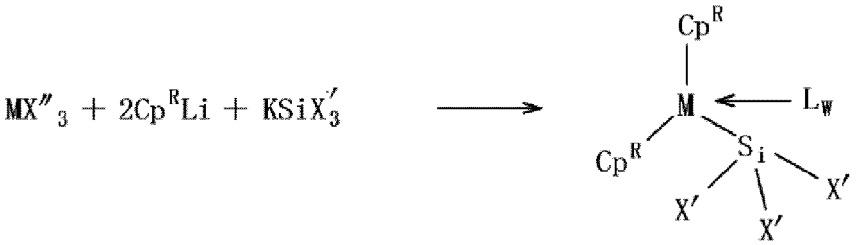

· · · (Y)

(Here, X" represents a halide.)

The half metallocene cation complex represented by the general formula (Z) may, for example, be obtained by the following reaction.

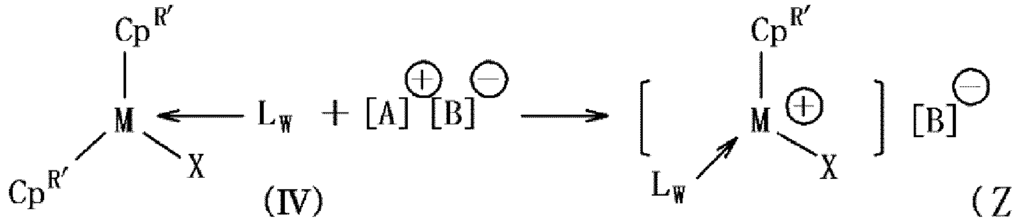

(IV) (Z)

In the compound represented by general formula (IV), M represents a lanthanoid element, scandium, or yttrium; each $Cp^{R'}$ independently represents unsubstituted or substituted cyclopentadienyl, indenyl, or fluorenyl; X represents a hydrogen atom, a halogen atom, an alkoxide group, a thiolate group, an amide group, a silyl group, or a hydrocarbon group having 1 to 20 carbon atoms; L represents a neutral Lewis base; and w represents an integer of 0 to 3. Furthermore, in the general formula $[A]^+[B]^-$ representing an ionic compound, $[A]^+$ represents a cation, and $[B]^-$ represents a non-coordinating anion.

Examples of the cation represented by $[A]^+$ include a carbonium cation, an oxonium cation, an amine cation, a phosphonium cation, a cycloheptatrienyl cation, and a ferrocenium cation containing a transition metal. Examples of the carbonium cation include trisubstituted carbonium cations such as a triphenylcarbonium cation and a tri(substituted phenyl)carbonium cation. More specifically, examples of the tri(substituted phenyl)carbonium cation include a tri(methylphenyl)carbonium cation. Examples of the amine cation include trialkylammonium cations such as a trimethylammonium cation, a triethylammonium cation, a tripropylammonium cation, and a tributylammonium cation; N,N-dialkylanilinium cations such as a N,N-dimethylanilinium cation, a N,N-diethylanilinium cation, and a N,N-2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl)phosphonium cation, and a tri(dimethylphenyl)phosphonium cation. Of these cations, the N,N-dialkylanilinium cations or the carbonium cations are preferred, and the N,N-dialkylanilinium cations are particularly preferred.

The ionic compound, represented by the general formula $[A]^+[B]^-$, to be used in the aforementioned reaction is a compound obtained by combining any one selected from the aforementioned non-coordinating anions and any one selected from the aforementioned cations. N,N-dimethylanilinium tetrakis(pentafluorophenyl)borate, triphenylcarbonium tetrakis(pentafluorophenyl)borate, and the like are preferred. The ionic compound represented by the general formula $[A]^+[B]^-$ is preferably added in an amount of 0.1-fold mol to 10-fold mol, more preferably about 1-fold mol, with respect to the metallocene complex. When the half metallocene cation complex represented by general formula (Z) is used in a polymerization reaction, the half metallocene cation complex represented by general formula (Z) may be directly supplied to the polymerization system. Alternatively, the compounds used in the aforementioned reaction, i.e. the compound represented by general formula (IV) and the ionic compound represented by general formula $[A]^+[B]^-$, may be separately supplied to the polymerization system to form the half metallocene cation complex represented by general formula (Z) in the reaction system. In addition, the half metallocene cation complex represented by general formula (Z) may be formed in the reaction system by using the metallocene complex represented by general formula (X) or (Y) and the ionic compound represented by the general formula $[A]^+[B]^-$ in combination.

The structure of the metallocene complexes represented by general formulas (X) and (Y) and the half metallocene cation complexes represented by general formula (Z) can be determined by X-ray structure analysis.

--Cyclopentadiene or the Like (at least one selected from the group consisting of substituted or unsubstituted cyclopentadiene, indene, and fluorene) (Component (B-1))--

Component (B-1) is selected from the group consisting of substituted or unsubstituted cyclopentadiene, indene, and fluorene, i.e. cyclopentadiene, a substituted cyclopentadiene compound, indene, a substituted indene compound, fluorene, and a substituted fluorene compound.

Examples of the substituted cyclopentadiene compound, substituted indene compound, and substituted fluorene compound include hydrocarbyl groups and metalloid groups. The hydrocarbyl group preferably has 1 to 20 carbon atoms, more preferably 1 to 10, and even more preferably 1 to 8. Preferred specific examples of the hydrocarbyl group include a methyl group, an ethyl group, a phenyl group, and a benzyl group. Examples of the metalloid in the metalloid group include germyl (Ge), stannyl (Sn), and silyl (Si). In addition, the metalloid group preferably has a hydrocarbyl group, and the hydrocarbyl group is preferably similar to the hydrocarbyl group described above. Specific examples of the metalloid group include a trimethylsilyl group.

The cyclopentadiene and substituted cyclopentadiene compound include a cyclopentadienyl group. Examples of the substituted cyclopentadiene compound include tetramethylcyclopentadiene and pentamethylcyclopentadiene.

The indene and substituted indene compound include an indenyl group. Examples of the substituted indene compound include 2-phenyl-1H-indene, 3-benzyl-1H-indene, 3-methyl-2-phenyl-1H-indene, 3-benzyl-2-phenyl-1H-indene, and 1-benzyl-1H-indene. In particular, 3-benzyl-1H-indene and 1-benzyl-1H-indene are preferable for decreasing the molecular weight distribution.

The fluorene and the substituted fluorene compound include a fluorenyl group. Examples of the substituted fluorene compound include trimethylsilyl fluorene and 9-methyl-9H-fluorene.

This configuration can increase the number of conjugated electrons with which component (B-1) is provided and can further increase the catalytic activity in the polymerization system. Therefore, the reaction time can be further shortened, and the reaction temperature can be further increased.

To obtain sufficient catalytic activity, the content of component (B-1) in the first and second polymerization catalyst compositions is preferably more than 0 mol, more preferably 0.5 mol or more, and particularly preferably 1 mol or more, per 1 mol of the rare earth element compound (component (A-1)). To suppress a reduction in catalytic activity, the content of component (B-1) is preferably 3 mol or less, more preferably 2.5 mol or less, and particularly preferably 2.2 mol or less per 1 mol of the rare earth element compound (component (A-1)).

This configuration can increase the number of conjugated electrons with which the cyclopentadiene, indene, or fluorene is provided and can further increase the catalytic activity in the polymerization system. Therefore, the reaction time can be further shortened, and the reaction temperature can be further increased.

--Anionic Tridentate Ligand Precursor (Component (B-2))--

Examples of the anionic tridentate ligand precursor include compounds represented by general formula (III). Such compounds can, for example, be produced by referring to Organometallics, 23, p. 47784787 (2004).

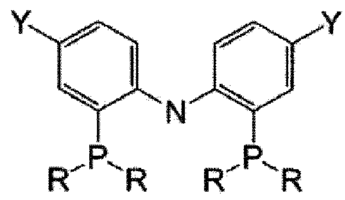

. . . (III)

(Here, R represents an alkyl group or an aryl group, and Y represents a hydrogen atom, an alkyl group, a halogeno group, a silyl group, or the like.)

In more detail, a PNP ligand such as bis(2-diphenylphosphinophenyl)amine may be used.

When component (B-2) is included in the fourth polymerization catalyst composition, the content of component (B-2) is preferably 0.5 mol or more, more preferably 1.0 mol or more, per 1 mol of component (A-1) to increase the catalytic activity in the reaction system and is preferably 1.5 mol or less, more preferably 1.2 mol or less, per 1 mol of component (A-1) to suppress a reduction in catalytic activity in the reaction system.

--Organic Metal Compound (Component (C))--

Examples of component (C) include organic metal compounds represented by general formula (I).

$$YR^1_aR^2_bR^3_c \ldots \qquad (I)$$

(Here, Y represents a metal element selected from the group consisting of elements of groups 1, 2, 12, and 13 of the periodic table; $R^1$ and $R^2$ each represent a hydrogen atom or a hydrocarbon group having 1 to 10 carbon atoms; $R^3$ represents a hydrocarbon group having 1 to 10 carbon atoms; $R^1$, $R^2$, and $R^3$ are identical or different; a is 1 and b and c are 0 when Y represents a metal element of group 1; a and b are 1 and c is 0 when Y represents a metal element of group 2 or group 12; and a, b, and c are 1 when Y represents a metal element of group 13.)

To increase the catalytic activity, $R^1$, $R^2$, and $R^3$ are preferably not all identical in general formula (I).

In greater detail, component (C) is preferably an organic aluminum compound represented by general formula (I').

$$AlR^4R^5R^6 \ldots \qquad (I')$$

(Here, $R^4$ and $R^5$ represent a hydrogen atom or a hydrocarbon group having 1 to 10 carbon atoms; $R^6$ represents a hydrocarbon group having 1 to 10 carbon atoms; and $R^4$, $R^5$, and $R^6$ may be the same or different.)

Specific examples of the organic aluminum compound include a trimethyl aluminum, a triethyl aluminum, a tri-n-propyl aluminum, a triisopropyl aluminum, a tri-n-butyl aluminum, a triisobutyl aluminum, a tri-t-butyl aluminum, a tripentyl aluminum, a trihexyl aluminum, a tricyclohexyl aluminum, a trioctyl aluminum; a diethylaluminum hydride, a di-n-propyl aluminum hydride, a di-n-butyl aluminum hydride, a diisobutyl aluminum hydride, a dihexyl aluminum hydride, a diisohexyl aluminum hydride, a dioctyl aluminum hydride, a diisooctyl aluminum hydride; and an ethyl aluminum dihydride, a n-propyl aluminum dihydride, and an isobutyl aluminum dihydride. The triethyl aluminum, the triisobutyl aluminum, the diethylaluminum hydride, and the diisobutyl aluminum hydride are particularly preferable, and the diisobutyl aluminum hydride is even more particularly preferable.

These organic aluminum compounds may be used alone or in a combination of two or more types.

When component (C) (organic metal compound) is included in any of the polymerization compositions, the content of component (C) is preferably 1 mol or more, more preferably 5 mol or more, per 1 mol of component (A-1) or (A-2) to increase the catalytic activity in the reaction system and is preferably 100 mol or less, more preferably 50 mol or less, and even more preferably 30 mol or less per 1 mol of component (A-1) or (A-2) to suppress a reduction in catalytic activity in the reaction system.

--Aluminoxane Compound (Component (D))--

Component (D) is a compound obtainable by placing an organic aluminum compound and a condensation

agent in contact.

Use of component (D) can further increase the catalytic activity in the polymerization system. Therefore, the reaction time can be further shortened, the reaction temperature can be further increased, and the activation and modification rate can be improved.

Examples of the organic aluminum compound include trialkyl aluminum such as trimethyl aluminum, triethyl aluminum, and triisobutyl aluminum, and mixtures thereof. Trimethyl aluminum, and a mixture of trimethyl aluminum and tributyl aluminum are particularly preferable.

Examples of the condensation agent include water.

Examples of component (D) include aluminoxane that has a repeating unit represented by general formula (S4).

$$-(Al(R^{10})O)_n- \ ... \qquad (S4)$$

(Here, $R^{10}$ represents a hydrocarbon group having 1 to 10 carbon atoms; a portion of the hydrocarbon group may be substituted by a halogen and/or an alkoxy group; $R^{10}$ may be the same or differ between repeating units; and n is 5 or more.)

The molecular structure of the aforementioned aluminoxane may be linear or a ring.

Also, n is preferably 10 or more.

Examples of the hydrocarbon group of $R^{10}$ include a methyl group, an ethyl group, a propyl group, and an isobutyl group. A methyl group is particularly preferable. These hydrocarbon groups may be used alone or in a combination of two or more types. A combination of a methyl group and an isobutyl group is preferable as the hydrocarbon group of $R^{10}$.

The aluminoxane preferably has high solubility in aliphatic hydrocarbons and preferably has low solubility in aromatic hydrocarbons. For example, commercially available aluminoxane is preferable as a hexane solution.

Examples of aliphatic hydrocarbons include hexane and cyclohexane.

Component (D) may, in particular, be a modified aluminoxane (TMAO®) (TMAO is a registered trademark in Japan, other countries, or both) represented by formula (S5).

$$-(Al(CH_3)_x(iso\text{-}C_4H_9)_yO)_m- \ ... \qquad (S5)$$

(Here, x + y is 1, and m is 5 or more.)

Examples of TMAO include TMAO-341 manufactured by Tosoh Finechem Corporation.

Component (D) may, in particular, be a modified aluminoxane (MMAO) represented by formula (S6).

$$-(Al(CH_3)_{0.7}(iso\text{-}C_4H_9)_{0.3}O)_k- \ ... \qquad (S6)$$

(Here, k is 5 or more.)

Examples of MMAO include MMAO-3A manufactured by Tosoh Finechem Corporation.

Furthermore, component (D) may, in particular, be a modified aluminoxane (PMAO) represented by formula (S7).

$$-[(CH_3)AlO]_i- \ ... \qquad (S7)$$

(Here, i is 5 or more.)

Examples of PMAO include TMAO-211 manufactured by Tosoh Finechem Corporation.

Among the aforementioned MMAO, TMAO, and PMAO, component (D) is preferably MMAO or TMAO to heighten the effect of increasing catalytic activity.

When component (D) (aluminoxane compound) is included in any of the polymerization compositions, the content of component (D) is preferably 10 mol or more, more preferably 100 mol or more, per 1 mol of the rare earth element in component (A-1) or (A-2) to increase the catalytic activity in the reaction system and is preferably 1000 mol or less, more preferably 800 mol or less, per 1 mol of the rare earth element in component (A-1) or (A-2) to suppress a reduction in catalytic activity in the reaction system.

--Halogen Compound (Component (E))--

Examples of component (E) include at least one compound selected from the group consisting of a halogen containing compound that functions as a Lewis acid (component (E-1)), a complex compound of a metal halide and a Lewis base (component (E-2)), and an organic compound including an active halogen (component (E-3)).

These compounds react with a rare earth element containing compound that has an M-N bond (such as component (A-1) or component (A-2)), or reacts with the reaction product of the rare earth element containing compound and a Lewis base, to yield a cationic transition metal compound, a halogenated transition metal compound, and/or a transition metal compound in which electrons are deficient in the transition metal center.

Use of component (E) can improve the cis-1,4 bond content of the conjugated diene-based polymer.

Examples of component (E-1) include halogen containing compounds containing an element of groups 3, 4, 5, 6, 8, 13, 14, or 15. An aluminum halide or an organometallic halide is particularly preferable.

Specific examples of the halogen containing compound that is a Lewis acid include titanium tetrachloride, tungsten hexachloride, tri(pentafluorophenyl)borate, methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, aluminum tribromide, tri(pentafluorophenyl)aluminum, dibutyltin dichloride, tin tetrachloride, phosphorus trichloride, phosphorus pentachloride, antimony trichloride, and antimony pentachloride. Ethyl aluminum dichloride, ethyl aluminum dibromide, diethyl aluminum chloride, diethyl aluminum bromide, ethyl aluminum sesquichloride, and ethyl aluminum sesquibromide are particularly preferable.

Chlorine or bromine is preferable as a halogen.

These halogen containing compounds that are Lewis acids may be used alone or in a combination of two or more types.

Examples of the metal halide used in component (E-2) include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, and gold bromide. Magnesium chloride, calcium chloride, barium chloride, zinc chloride, manganese chloride, and copper chloride are particularly preferable, and magnesium chloride, zinc chloride, manganese chloride, and copper chloride are even more particularly preferable.

The Lewis base used in component (E-2) is preferably a phosphorus compound, a carbonyl compound, a nitrogen compound, an ether compound, or alcohol.

Examples include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and lauryl alcohol. Tri-2-ethylhexyl phosphate, tricresyl phosphate, acetylacetone, 2-ethylhexanoic acid, versatic acid, 2-ethylhexyl alcohol, 1-decanol, and lauryl alcohol are particularly preferable.

The Lewis base is reacted in a proportion of 0.01 mol to 30 mol, preferably 0.5 mol to 10 mol, per 1 mol of the metal halide. The use of the product of the reaction with this Lewis base can reduce the metal remaining in the polymer.

Examples of component (E-3) include benzyl chloride.

When component (E) (halogen compound) is included in any of the polymerization catalyst compositions, the content of component (E) is preferably over 0 mol, more preferably 0.5 mol or more, and particularly preferably 1.0 mol or more, per 1 mol of component (A-1) or (A-2) to increase the catalytic activity and is preferably 20 mol or less, more preferably 10 mol or less, per 1 mol of component (A-1) or (A-2) to maintain solubility of component (E) and suppress a reduction in catalytic activity.

--Ionic Compound (Component (F))--

The ionic compound (component (F)) is, for example, an ionic compound that is made up of a non-coordinating anion and a cation and can generate a cationic transition metal compound by reacting with the rare earth element compound that is component (A-1) or the product of its reaction with a Lewis base.

Examples of the non-coordinating anion (such as a tetravalent boron anion) include tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and tridecahydride-7,8-dicarbaundecaborate.

Examples of the cation include a carbonium cation, an oxonium cation, an ammonium cation, a phosphonium cation, a cycloheptatrienyl cation, and a ferrocenium cation including a transition metal.

Specific examples of the carbonium cation include trisubstituted carbonium cations such as a triphenylcarbonium cation and a tri(substituted phenyl)carbonium cation, and more specific examples of the tri(substituted phenyl)carbonium cation include a tri(methylphenyl)carbonium cation and a tri(dimethylphenyl)carbonium cation. Examples of the ammonium cation include trialkylammonium cations such as a trimethylammonium cation, a triethylammonium cation, a tripropylammonium cation, and a tributylammonium cation (such as a tri(n-butyl)ammonium cation); N,N-dialkylanilinium cations such as a N,N-dimethylanilinium cation, N,N-diethylanilinium cation, and a N,N-2,4,6-pentamethylanilinium cation; and dialkylammonium cations such as a diisopropylammonium cation and a dicyclohexylammonium cation.

Specific examples of the phosphonium cation include triarylphosphonium cations such as a triphenylphosphonium cation, a tri(methylphenyl)phosphonium cation, and a tri(dimethylphenyl)phosphonium cation.

Therefore, the ionic compound (component (F)) is preferably a compound obtained by combining any one of the above-described non-coordinating anions and any one of the above-described cations. Specifically, a N,N-dimethylanilinium tetrakis(pentafluorophenyl)borate and a triphenylcarbonium tetrakis(pentafluorophenyl)borate are preferred.

These ionic compounds (component (F)) may be used alone, or a mixture of two or more types may be used. When the ionic compound (component (F)) is included in any of the polymerization catalyst compositions, the content of component (F) is preferably 0.1 mol to 10 mol, more preferably approximately 1 mol, per 1 mol of component (A-1) or (A-2) to increase the catalytic activity.

-Conjugated Diene Monomer-

The conjugated diene monomer is not restricted and may be appropriately selected according to the purpose. Examples include 1,3-butadiene, isoprene, 1,3-pentadiene, 2-ethyl-1,3-butadiene, 2,3-dimethylbutadiene (2,3-dimethyl-1,3-butadiene), 2-methylpentadiene, 4-methylpentadiene, 2,4-hexadiene, and 1,3-hexadiene. These may be used alone or in a combination of two or more types.

Among these, 1,3-butadiene and isoprene are preferable for improving the various types of performance of a rubber composition, a tire, and the like.

The solvent used in the polymerization reaction process is not restricted, as long as the solvent is inactive in the polymerization reaction, and may be appropriately selected according to the purpose. Examples include n-hexane, cyclohexane, aromatic hydrocarbons (benzene, toluene, xylene, and the like), and mixtures thereof.

Any widely-known method in the relevant technical field can be used in the polymerization reaction process, such as solution polymerization, suspension polymerization, liquid phase bulk polymerization, emulsion polymerization, gas phase polymerization, or solid phase polymerization.

The reaction temperature in the polymerization reaction process is not restricted and may be appropriately selected according to the purpose. The temperature is, however, preferably -100°C to 300°C, more preferably 0°C to 200°C, and particularly preferably 25°C to 120°C. The cis-1,4 selectivity may decrease at high temperatures, whereas the reaction rate may decrease at low temperatures.

The reaction pressure in the polymerization reaction process is not restricted and may be appropriately selected according to the purpose. For example, the reaction pressure may be normal pressure. The monomer might not be sufficiently incorporated into the polymerization reaction at a high pressure, whereas the reaction rate may decrease at a low pressure.

The reaction time in the polymerization reaction process is not restricted and may be appropriately selected according to the purpose. For example, the reaction time may be 0.5 to 3 hours.

-Conjugated Diene-Based Polymer-

The conjugated diene-based polymer may be a homopolymer of a conjugated diene monomer or may be a copolymer thereof.

The cis-1,4 bond content of the conjugated diene-based polymer is not restricted and may be appropriately selected according to the purpose, but the cis-1,4 bond content is preferably 95% or more, more preferably 97% or more, and even more preferably 98% or more. As the cis-1,4 bond content of the conjugated diene-based polymer is higher, the elongation-induced crystallization ability of the conjugated diene-based polymer can be increased, and the elasticity of the conjugated diene-based polymer can be increased.

The trans-1,4 bond content of the conjugated diene-based polymer is not restricted and may be appropriately selected according to the purpose, but the trans-1,4 bond content is preferably 5% or less, more preferably 3% or less, and even more preferably 1% or less. As the trans-1,4 bond content of the conjugated diene-based polymer is lower, the elongation-induced crystallization ability of the conjugated diene-based polymer can be increased, and the elasticity of the conjugated diene-based polymer can be increased.

The 1,2-vinyl bond content of the conjugated diene-based polymer is not restricted and may be appropriately selected according to the purpose, but the 1,2-vinyl bond content is preferably 5% or less, more preferably 3% or less, and even more preferably 1% or less. As the 1,2-vinyl bond content of the conjugated diene-based polymer is lower, the elongation-induced crystallization ability of the conjugated diene-based polymer can be increased, and the elasticity of the conjugated diene-based polymer can be increased.

The 3,4-vinyl bond content of the conjugated diene-based polymer is not restricted and may be appropriately

selected according to the purpose, but the 3,4-vinyl bond content is preferably 5% or less, more preferably 3% or less, and even more preferably 1% or less. As the 3,4-vinyl bond content of the conjugated diene-based polymer is lower, the elongation-induced crystallization ability of the conjugated diene-based polymer can be increased, and the elasticity of the conjugated diene-based polymer can be increased.

The number-average molecular weight (Mn) of the conjugated diene-based polymer is not restricted, and may be appropriately selected according to the purpose, but is preferably 100,000 or more and more preferably 200,000 or more.

The molecular weight distribution (Mw/Mn) of the conjugated diene-based polymer is not restricted, and may be appropriately selected according to the purpose, but is preferably 3.0 or less and more preferably 2.5 or less.

<Organic Metal Compound Adding Process>

The organic metal compound adding process is a process of adding an organic metal compound after the polymerization reaction process. The organic metal compound adding process is preferably performed in the same reaction system (in one pot) as the polymerization reaction process.

The living terminal of the conjugated diene-based polymer that is obtained by the polymerization reaction retains an active organic metal site and the like and can function as an active site that allows a modification reaction with a modifying agent. In some cases, however, the active organic metal site separates due to the heat of the reaction system, deactivating the living terminal. This may reduce the modification rate of the conjugated diene-based polymer. We discovered that adding an organic metal compound after the polymerization reaction process and controlling the equilibrium relationship between retention and separation of the active organic metal site in the reaction system can increase the retention rate of the active organic metal site of the living terminal (the active site that allows a modification reaction) and can increase the modification rate of the conjugated diene-based polymer.

The organic metal compound that is added in the organic metal compound adding process is not restricted, and may be appropriately selected according to the purpose, but is preferably an organic metal compound represented by general formula (II).

$$YR^1{}_aR^2{}_bR^3{}_c \quad ... \qquad (II)$$

(Here, Y represents a metal element selected from the group consisting of elements of groups 1, 2, 12, and 13 of the periodic table; $R^1$ and $R^2$ each represent a hydrogen atom or a hydrocarbon group having 1 to 10 carbon atoms; $R^3$ represents a hydrocarbon group having 1 to 10 carbon atoms; $R^1$, $R^2$, and $R^3$ are identical or different; a is 1 and b and c are 0 when Y represents a metal element of group 1; a and b are 1 and c is 0 when Y represents a metal element of group 2 or group 12; and a, b, and c are 1 when Y represents a metal element of group 13.)

This configuration can further improve the modification rate of the modified conjugated diene-based polymer that is produced.

To further improve the modification rate, $R^1$, $R^2$, and $R^3$ are preferably not all identical in general formula (II).

In general formula (II), $R^1$ preferably represents a hydrogen atom when Y represents a metal element of group 1, at least one of $R^1$ and $R^2$ preferably represents a hydrogen atom when Y represents a metal element of group 2 or group 12, and at least one of $R^1$, $R^2$, and $R^3$ preferably represents a hydrogen atom when Y represents a metal element of group 13.

This configuration can further improve the modification rate of the modified conjugated diene-based polymer that is produced.

The organic metal compound is more preferably an organic aluminum compound represented by general formula (II').

$$AlR^4R^5R^6 \quad ... \qquad (II')$$

(Here, $R^4$ and $R^5$ represent a hydrogen atom or a hydrocarbon group having 1 to 10 carbon atoms; $R^6$ represents a hydrocarbon group having 1 to 10 carbon atoms; and $R^4$, $R^5$, and $R^6$ may be the same or different.)

Specific examples of the organic aluminum compound include trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, trioctyl aluminum; diethylaluminum hydride, di-n-propyl aluminum hydride, di-n-butyl aluminum hydride, diisobutyl aluminum hydride, dihexyl aluminum hydride, diisohexyl aluminum hydride, dioctyl aluminum hydride, diisooctyl aluminum hydride; and ethyl aluminum dihydride, n-propyl aluminum dihydride, and isobutyl aluminum dihydride. The triethyl aluminum, triisobutyl aluminum, diethylaluminum hydride, and diisobutyl aluminum hydride are particularly preferable, and the diisobutyl aluminum hydride is even more particularly preferable.

These organic metal compounds may be used alone or in a combination of two or more types. The organic

metal compound may be the same as or different from the organic metal compound of component (C) when a polymerization catalyst composition including the organic metal compound of component (C) is used in the polymerization reaction process. To improve the modification rate, the organic metal compound added in the organic metal compound adding process is preferably the same organic metal compound as the component (C) included in the polymerization catalyst composition that was used.

The amount of the organic metal compound that is added is not limited but is preferably 1 mol or more, more preferably 5 mol or more, per 1 mol of component (A-1) or (A-2) to further increase the catalytic activity and is preferably 50 mol or less, more preferably 30 mol or less, per 1 mol of component (A-1) or (A-2) from the standpoint of (purification of the polymer).

The amount of the organic metal compound that is added is preferably 1/10 mol or more, more preferably 1/8 mol or more, even more preferably 1/6 mol or more, and is preferably 1 mol or less, more preferably 1/2 mol or less, and even more preferably 1/3 mol or less per 1 mol of component (C).

In the organic metal compound adding process, stirring or the like may be performed before, during, or after addition of the organic metal compound as necessary to make the reaction system uniform.

<Cooling Process>

The cooling process may optionally be included and is a process of cooling the reaction system after the polymerization reaction process and before the modification reaction process. The cooling process is preferably performed to improve the modification rate of the modified conjugated diene-based polymer that is produced.

The reaction system refers to the reaction system after the polymerization reaction process. This reaction system includes at least the conjugated diene-based polymer and the polymerization catalyst composition and may include a solvent as necessary.

The cooling process can be performed before, during or after the organic metal compound adding process but is preferably performed after the organic metal compound adding process from the standpoint of reliable equilibrium transfer from separation to retention of active organic metal sites in the conjugated diene-based polymer.

The cooling in the cooling process is not restricted and may be appropriately selected according to the purpose, as long as the reaction system is cooled.

The temperature to which the reaction system is cooled is not restricted, and may be appropriately selected according to the purpose, but is preferably 50°C or less, more preferably 40°C or less, and particularly preferably 30°C or less. The temperature to which the reaction system is cooled is increasingly preferable as the temperature is lower, but in terms of production costs, the temperature is preferably around room temperature.

The cooling time in the cooling process is not restricted, and may be appropriately selected according to the purpose, but is preferably 1 min to 10 min and more preferably 3 min to 7 min. The cooling time is increasingly preferable as the time is longer.

The cooling rate in the cooling process is not restricted, and may be appropriately selected according to the purpose, but is preferably 1°C/min to 10°C/min and more preferably 3°C/min to 7°C/min.

<Modification Reaction Process>

The modification reaction process is a process to modify the conjugated diene-based polymer, obtained by the polymerization reaction process, with a modifying agent after the organic metal compound adding process, or after the cooling process when the cooling process is performed. The modification reaction process is preferably performed in the same reaction system (in one pot) as the polymerization reaction process, the organic metal compound adding process, and the optionally included cooling process.

The modifying agent used in the modification reaction process preferably includes a functional group that, with respect to a polymer that has an active organic metal site, can undergo a substitution reaction or an addition reaction with the active organic metal site, and the modifying agent preferably can cause a functional group to be added to the polymer, or can raise the molecular weight by coupling, as a result of being reacted with a compound that does not include an active proton or an onium salt that deactivates the active organic metal site.

The modifying agent used in the modification reaction process is not restricted and may be appropriately selected according to the purpose. Representative modifying agents preferably include at least one selected from among an azacyclopropane group, a ketone group, a carboxyl group, a thiocarboxyl group, a carbonyl group, an oxycarbonyl group, a carbonate, a carboxylic acid anhydride, a carboxylic acid metal salt, an acid halide, a urea group, a thiourea group, an amide group, a thioamide group, a cyano group, an isocyanate group, a thioisocyanate group, a halogenated isocyano group, an epoxy group, a thioepoxy group, an imine group, and a M-Z bond (where M is Sn, Si, Ge, or P, and Z is a halogen atom), and preferably do not include an active proton or an onium salt that deactivates the active organic metal site.

More specific examples of the modifying agent include at least one selected from among the compounds (a) to (j) below.

-Compound (a)-

Compound (a) is represented by general formula (V).

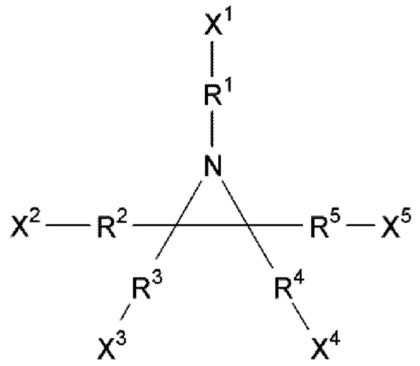

· · · (V)

Here, $X^1$ to $X^5$ represent a monovalent functional group that includes at least one selected from among a hydrogen atom, a halogen atom, a carbonyl group, a thiocarbonyl group, an isocyanate group, a thioisocyanate group, an epoxy group, a thioepoxy group, a halogenated silyl group, a hydrocarbyl oxysilyl group, and a sulfonyloxy group, and that does not include an active proton or an onium salt. $X^1$ to $X^5$ may be the same or different, but at least one does not represent a hydrogen atom.

$R^1$ to $R^5$ independently represent a single bond or a divalent hydrocarbon group having 1 to 18 carbon atoms. Examples of the divalent hydrocarbon group include an alkylene group having 1 to 18 carbon atoms, an alkenylene group having 2 to 18 carbon atoms, an arylene group having 6 to 18 carbon atoms, and an aralkylene group having 7 to 18 carbon atoms. Among these, an alkylene group having 1 to 18 carbon atoms is preferable, and an alkylene group having 1 to 10 carbon atoms is particularly preferable. The alkylene group may be linear, branched, or a ring, but is particularly preferably linear. Examples of linear alkylene groups include a methylene group, an ethylene group, a trimethylene group, a tetramethylene group, a pentamethylene group, a hexamethylene group, an octamethylene group, and a decamethylene group.

A plurality of aziridine rings may bond via any of $X^1$ to $X^5$ and $R^1$ to $R^5$.

When $X^1$ is a hydrogen atom in general formula (V), $R^1$ is preferably not a single bond in compound (a).

Examples of compounds represented by general formula (V) include, but are not limited to, 1-acetylaziridine, 1-propionylaziridine, 1-butyrylaziridine, 1-isobutyrylaziridine, 1-valerylaziridine, 1-isovalerylaziridine, 1-pivaloylaziridine, 1-acetyl-2-methylaziridine, 2-methyl-1-propionylaziridine, 1 -butyryl-2-methylaziridine, 2-methyl-1-isobutyrylaziridine, 2-methyl-1-valerylaziridine, 1-isovaleryl-2-methylaziridine, 2-methyl-1-pivaloyl aziridine, ethyl-3-(1-aziridinyl) propionate, propyl-3-(1-aziridinyl) propionate, butyl-3-(1-aziridinyl) propionate, ethylene glycol bis[3-(1-aziridinyl)propionate], trimethylolpropane tris[3-(1-aziridinyl)propionate], ethyl-3-(2-methyl-1-aziridinyl)propionate, propyl-3-(2-methyl-1-aziridinyl)propionate, butyl-3-(2-methyl-1-aziridinyl) propionate, ethylene glycol bis[3-(2-methyl-1-aziridinyl)propionate], trimethylolpropane tris[3-(2-methyl-1-aziridinyl)propionate], neopentylglycol bis[3-(1-aziridinyl)propionate], neopentylglycol bis[3-(2-methyl-1-aziridinyl)propionate], di(1-aziridinylcarbonyl)methane, 1,2-di(1-aziridinylcarbonyl)ethane, 1,3-di(1-aziridinylcarbonyl)propane, 1,4-di(1-aziridinylcarbonyl)butane, 1,5-di(1-aziridinylcarbonyl)pentane, di(2-methyl-1-aziridinylcarbonyl)methane, 1,2-di(2-methyl-1-aziridinylcarbonyl)ethane, 1,3-di(2-methyl-1-aziridinylcarbonyl)propane, and 1,4-di(2-methyl-1-aziridinylcarbonyl)butane.

-Compound (b)-

Compound (b) is a halogenated organic metal compound or a halogenated metal compound represented by $R^6{}_nM'Z_{4-n}$, by $M'Z_4$, or by $M'Z_3$. (Here, each $R^6$ is the same or different and represents a hydrocarbon group having 1 to 20 carbon atoms; M' represents a tin atom, a silicon atom, a germanium atom, or a phosphorus atom; Z represents a halogen atom; and n represents an integer of 0 to 3.)

When M' represents a tin atom in each of the above formulas, examples of the compound (b) include triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, octyltin trichloride, and tin tetrachloride.

When M' represents a silicon atom in each of the above formulas, examples of the compound (b) include triphenyl chlorosilane, trihexyl chlorosilane, trioctyl chlorosilane, tributyl chlorosilane, trimethyl chlorosilane, diphenyl dichlorosilane, dihexyl dichlorosilane, dioctyl dichlorosilane, dibutyl dichlorosilane, dimethyl dichlorosilane, methyl dichlorosilane, phenyl chlorosilane, hexyl tridichlorosilane, octyl trichlorosilane, butyl trichlorosilane, methyl trichlorosilane, and silicon tetrachloride.

Furthermore, when M' represents a germanium atom in each of the above formulas, examples of the compound (b) include triphenylgermanium chloride, dibutylgermanium dichloride, diphenylgermanium dichloride, butylgermanium trichloride, and germanium tetrachloride. When M' represents a phosphorus atom in each of the above formulas, examples of the compound (b) include phosphorus trichloride.

As the compound (b), an organic metal compound that includes an ester group or a carbonyl group, represented by the formulas below, in the molecule can be used as the modifying agent.

$$R^7{}_nM'(-R^8\text{-}COOR^9)_{4-n}$$

$$R^7{}_nM'(-R^8\text{-}COR^9)_{4-n}$$

(Here, each $R^7$ and $R^8$ is the same or different and represents a hydrocarbon group having 1 to 20 carbon atoms; $R^9$ represents a hydrocarbon group having 1 to 20 carbon atoms; a carbonyl group or an ester group may be included in a side chain; M' represents a tin atom, a silicon atom, a germanium atom, or a phosphorus atom; and n represents an integer of 0 to 3.)

One or more of any of the above-described compounds (b) may be used in any ratio.

-Compound (c)-

The compound (c) is a heteroallene compound having a Y=C=Y' bond in the molecule.

Here, Y is a carbon atom, an oxygen atom, a nitrogen atom, or a sulfur atom, and Y' is an oxygen atom, a nitrogen atom, or a sulfur atom. Compound (c) is a ketene compound when Y is a carbon atom and Y' is an oxygen atom; a thioketene compound when Y is a carbon atom and Y' is a sulfur atom; an isocyanate compound when Y is a nitrogen atom and Y' is an oxygen atom; a thioisocyanate compound when Y is a nitrogen atom and Y' is a sulfur atom; a carbodiimide compound when both Y and Y' are nitrogen atoms; carbon dioxide when both Y and Y' are oxygen atoms; carbonyl sulfide when Y is an oxygen atom and Y' is a sulfur atom; and carbon disulfide when both Y and Y' are sulfur atoms. Compound (c) is not, however, limited to these combinations.

Among these compounds, examples of the ketene compound include ethyl ketene, butyl ketene, phenyl ketene and toluoyl ketene. Examples of the thioketene compound include ethylene thioketene, butyl thioketene, phenyl thioketene and toluoyl thioketene. Examples of the isocyanate compound include phenyl isocyanate, 2,4-tolylene diisocyanate, 2,6-tolylene diisocyanate, diphenylmethane diisocyanate, polymeric type diphenylmethane diisocyanates, and hexamethylene diisocyanate. Examples of the thioisocyanate compound include phenyl thioisocyanate, 2,4-tolylene dithioisocyanate, and hexamethylene dithioisocyanate. Examples of the carbodiimide compound include N,N'-diphenylcarbodiimide and N,N'-ethylcarbodiimide.

-Compound (d)-

Compound (d) is a three-membered heterocyclic compound having a bond represented by general formula (VI) in the molecule.

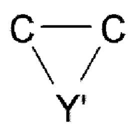

· · · (VI)

(Here, Y' is an oxygen atom or a sulfur atom.)

Component (d) is, for example, an epoxy compound when Y' represents an oxygen atom and is a thiirane compound when Y' represents a sulfur atom. Examples of the epoxy compound include ethylene oxide, propylene oxide, cyclohexene oxide, styrene oxide, epoxidized soybean oil, and epoxidized natural rubber. Examples of the thiirane compound include thiirane, methylthiirane, and phenylthiirane.

-Compound (e)-

Compound (e) is a halogenated isocyano compound.
The halogenated isocyano compound has a bond represented by the following general formula in the molecule.

>N=C-X

(Here, X is a halogen atom.)
Examples of the compound (e) include 2-amino-6-chloropyridine, 2,5-dibromopyridine, 4-chloro-2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino-4-chloro-6-methylpyrimidine, 2-amino-4,6-dichloropyrimidine, 6-chloro-2,4-dimethoxypyrimidine, 2-chloropyrimidine, 2,4-dichloro-6-methylpyrimidine, 4,6-dichoro-2-(methylthio)pyrimidine, 2,4,5,6-tetrachloropyrimidine, 2,4,6-trichloropyrimidine, 2-amino-6-chloro-pyrazine, 2,6-dichloropyrazine, 2,4-bis(methylthio)-6-chloro-1,3,5-triazine, 2,4,6-trichloro-1,3,5-triazine, 2-bromo-5-nitrothiazole, 2-chlorobenzothiazole, and 2-chlorobenzoxazole.

-Compound (f)-

Compound (f) is a carboxylic acid, an acid halide, an ester compound, a carbonic acid ester compound, or an acid anhydride represented by $R^{10}$-$(COOH)_m$, $R^{11}(COZ)_m$, $R^{12}$-$(COO$-$R^{13})$, $R^{14}$-OCOO-$R^{15}$, $R^{16}$-$(COOCO$-$R^{17})_m$, or general formula (VII).

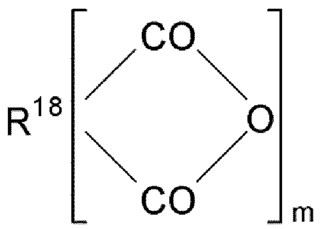

· · · (VII)

(Here, each of $R^{10}$ to $R^{18}$ is the same or different and represents a hydrocarbon group having 1 to 50 carbon atoms, Z represents a halogen atom, and m represents an integer of 1 to 5.)
Examples of the carboxylic acid in compound (f) include acetic acid, stearic acid, adipic acid, maleic acid, benzoic acid, acrylic acid, methacrylic acid, phthalic acid, isophthalic acid, terephthalic acid, trimellitic acid, pyromellitic acid, mellitic acid, and products of partial or complete hydrolysis of polymethacrylic acid ester compounds or polyacrylic acid compounds.
Examples of the acid halide in compound (f) include acetic acid chloride, propionic acid chloride, butanoic acid chloride, isobutanoic acid chloride, octanoic acid chloride, acrylic acid chloride, benzoic acid chloride, stearic acid chloride, phthalic acid chloride, maleic acid chloride, oxaphosphoric acid chloride, acetyl iodide, benzoyl iodide, acetyl fluoride, and benzoyl fluoride.
Examples of the ester compound in compound (f) include ethyl acetate, ethyl stearate, diethyl adipate, diethyl malate, methyl benzoate, ethyl acrylate, ethyl methacrylate, diethyl phthalate, dimethyl terephthalate, tributyl trimellitate, tetraoctyl pyromellitate, hexaethyl mellitate, phenyl acetate, polymethyl methacrylate, polyethyl acrylate, and polyisobutyl acrylate. Examples of the carbonic acid ester compound include dimethyl carbonate, diethyl carbonate, dipropyl carbonate, dihexyl carbonate, and diphenyl carbonate. Examples of the acid anhydride include acid anhydrides between molecules of acetic anhydride, propionic anhydride, isobutyric anhydride, isovaleric anhydride, heptanoic anhydride, benzoic anhydride, cinnamic anhydride, and the like; and acid anhydrides within the molecule of succinic anhydride, methylsuccinic anhydride, maleic anhydride, glutaric anhydride, citraconic anhydride, phthalic anhydride, copolymers of styrene and maleic anhydride, and the like.
The compounds listed as examples of compound (f) may include a non-protonic polar group, such as an ether group or a tertiary amino group, in the structure thereof as long as the object of the present disclosure is not adversely affected. One type of compound (f) may be used alone, or a mixture of two or more types may be used. Furthermore, as an impurity, compound (f) may include a compound containing a free alcohol group or phenol group.

-Compound (g)-

Compound (g) is a metal salt of a carboxylic acid and is represented by $R^{19}_kM''(OCOR^{20})_{4-k}$, $R^{21}_kM''(OCO$-$R^{22}$-$COOR^{23})_{4-k}$, or general formula (VIII).

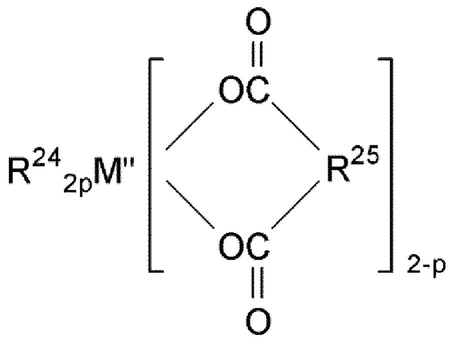

· · · (VIII)

(Here, each of $R^{19}$ to $R^{25}$ is the same or different and represents a hydrocarbon group having 1 to 20 carbon atoms; M" represents a tin atom, a silicon atom, or a germanium atom; k represents an integer of 0 to 3; and p represents an integer of 1 to 2.)

Examples of $R^{19}{}_kM''(OCOR^{20})_{4-k}$ in compound (g) include triphenyltin laurate, triphenyltin 2-ethylhexanoate, triphenyltin naphthenate, triphenyltin acetate, triphenyltin acrylate, tri-n-butyltin laurate, tri-n-butyltin 2-ethylhexanoate, tri-n-butyltin naphthenate, tri-n-butyltin acetate, tri-n-butyltin acrylate, tri-t-butyltin laurate, tri-t-butyltin 2-ethylhexanoate, tri-t-butyltin naphthenate, tri-t-butyltin acetate, tri-t-butyltin acrylate, triisobutyltin laurate, triisobutyltin 2-ethylhexanoate, triisobutyltin naphthenate, triisobutyltin acetate, triisobutyltin acrylate, triisopropyltin laurate, triisopropyltin 2-ethylhexanoate, triisopropyltin naphthenate, triisopropyltin acetate, triisopropyltin acrylate, trihexyltin laurate, trihexyltin 2-ethylhexanoate, trihexyltin acetate, trihexyltin acrylate, trioctyltin laurate, trioctyltin 2-ethylhexanoate, trioctyltin naphthenate, trioctyltin acetate, trioctyltin acrylate, tri-2-ethylhexyltin laurate, tri-2-ethylhexyltin 2-ethylhexanoate, tri-2-ethylhexyltin naphthenate, tri-2-ethylhexyltin acetate, tri-2-ethylhexyltin acrylate, tristearyltin laurate, tristearyltin 2-ethylhexanoate, tristearyltin naphthenate, tristearyltin acetate, tristearyltin acrylate, tribenzyltin laurate, tribenzyltin 2-ethylhexanoate, tribenzyltin naphthenate, tribenzyltin acetate, tribenzyltin acrylate, diphenyltin dilaurate, diphenyltin di-2-ethylhexanoate, diphenyltin distearate, diphenyltin dinaphthenate, diphenyltin diacetate, diphenyltin diacrylate, di-n-butyltin dilaurate, di-n-butyltin di-2-ethylhexanoate, di-n-butyltin distearate, di-n-butyltin dinaphthenate, di-n-butyltin diacetate, di-n-butyltin diacrylate, di-t-butyltin dilaurate, di-t-butyltin di-2-ethylhexanoate, di-t-butyltin distearate, di-t-butyltin dinaphthenate, di-t-butyltin diacetate, di-t-butyltin diacrylate, diisobutyltin dilaurate, diisobutyltin di-2-ethylhexanoate, diisobutyltin distearate, diisobutyltin dinaphthenate, diisobutyltin diacetate, diisobutyltin diacrylate, diisopropyltin dilaurate, diisopropyltin 2-ethylhexanoate, diisopropyltin distearate, diisopropyltin dinaphthenate, diisopropyltin diacetate, diisopropyltin diacrylate, dihexyltin dilaurate, dihexyltin di-2-ethylhexanoate, dihexyltin distearate, dihexyltin dinaphthenate, dihexyltin diacetate, dihexyltin diacrylate, di-2-ethylhexyltin dilaurate, di-2-ethylhexyltin 2-ethylhexanoate, di-2-ethylhexyltin distearate, di-2-ethylhexyltin dinaphthenate, di-2-ethylhexyltin diacetate, di-2-ethylhexyltin diacrylate, dioctyltin dilaurate, dioctyltin di-2-ethylhexanoate, dioctyltin distearate, dioctyltin dinaphthenate, dioctyltin diacetate, dioctyltin diacrylate, distearyltin dilaurate, distearyltin di-2-ethylhexanoate, distearyltin distearate, distearyltin dinaphthenate, distearyltin diacetate, distearyltin diacrylate, dibenzyltin dilaurate, dibenzyltin di-2-ethylhexanoate, dibenzyltin distearate, dibenzyltin dinaphthenate, dibenzyltin diacetate, dibenzyltin diacrylate, phenyltin trilaurate, phenyltin tri-2-ethylhexanoate, phenyltin trinaphthenate, phenyltin triacetate, phenyltin triacrylate, n-butyltin trilaurate, n-butyltin tri-2-ethylhexanoate, n-butyltin trinaphthenate, n-butyltin triacetate, n-butyltin triacrylate, t-butyltin trilaurate, t-butyltin tri-2-ethylhexanoate, t-butyltin trinaphthenate, t-butyltin triacetate, t-butyltin triacrylate, isobutyltin trilaurate, isobutyltin tri-2-ethylhexanoate, isobutyltin trinaphthenate, isobutyltin triacetate, isobutyltin triacrylate, isopropyltin trilaurate, isopropyltin tri-2-ethylhexanoate, isopropyltin trinaphthenate, isopropyltin triacetate, isopropyltin triacrylate, hexyltin trilaurate, hexyltin tri-2-ethylhexanoate, hexyltin trinaphthenate, hexyltin triacetate, hexyltin triacrylate, octyltin trilaurate, octyltin tri-2-ethylhexanoate, octyltin trinaphthenate, octyltin triacetate, octyltin triacrylate, 2-ethylhexyl-tin trilaurate, 2-ethylhexyltin tri-2-ethylhexanoate, 2-ethylhexyltin trinaphthenate, 2-ethylhexyltin triacetate, 2-ethylhexyltin triacrylate, stearyltin trilaurate, stearyltin tri-2-ethylhexanoate, stearyltin trinaphthenate, stearyltin triacetate, stearyltin triacrylate, benzyltin trilaurate, benzyltin tri-2-ethylhexanoate, benzyltin trinaphthenate, benzyltin triacetate, and benzyltin triacrylate.

Examples of $R^{21}{}_kM''(OCO\text{-}R^{22}\text{-}COOR^{23})_{4-k}$ in compound (g) include diphenyltin bismethylmalate, diphenyltin bis-2-ethylhexanoate, diphenyltin bisoctylmalate, diphenyltin bisbenzylmalate, di-n-butyltin bismethylmalate, di-n-butyltin bis-2-ethylhexanoate, di-n-butyltin bisoctylmalate, di-n-butyltin bisbenzyl-malate, di-t-butyltin bismethylmalate, di-t-butyltin bis-2-ethylhexanoate, di-t-butyltin bisoctylmalate, di-t-butyltin bisbenzylmalate, diisobutyltin bismethylmalate, diisobutyltin bis-2-ethylhexanoate, diisobutyltin bisoctylmalate, diisobutyltin bisbenzylmalate, diisopropyltin bismethylmalate, diisopropyltin bis-2-ethylhexanoate, diisopropyltin bisoctylmalate, diisopropyltin bisbenzylmalate, dihexyltin bismethylmalate, dihexyltin bis-2-ethylhexanoate, dihexyltin bisoctylmalate, dihexyltin bisbenzylmalate, di-2-ethylhexyltin bismethylmalate, di-2-ethylhexyltin bis-2-ethylhexanoate, di-2-ethylhexyltin bisoctylmalate, di-2-ethylhexyltin bisbenzylmalate, dioctyltin bismethylmalate, dioctyltin bis-2-ethylhexanoate, dioctyltin bisoctylmalate, dioctyltin bisbenzylmalate,

distearyltin bismethylmalate, distearyltin bis-2-ethylhexanoate, distearyltin bisoctylmalate, distearyltin bisbenzylmalate, dibenzyltin bismethylmalate, dibenzyltin bis-2-ethylhexanoate, dibenzyltin bisoctylmalate, dibenzyltin bisbenzylmalate, diphenyltin bismethyladipate, diphenyltin bis-2-ethylhexanoate, diphenyltin bisoctyladipate, diphenyltin bisbenzyladipate, di-n-butyltin bismethyladipate, di-n-butyltin bis-2-ethylhexanoate, di-n-butyltin bisoctyladipate, di-n-butyltin bisbenzyladipate, di-t-butyltin bismethyladipate, di-t-butyltin bis-2-ethylhexanoate, di-t-butyltin bisoctyladipate, di-t-butyltin bisbenzyladipate, diisobutyltin bismethyladipate, diisobutyltin bis-2-ethylhexanoate, diisobutyltin bisoctyladipate, diisobutyltin bisbenzyladipate, diisopropyltin bismethyladipate, diisopropyltin bis-2-ethylhexanoate, diisopropyltin bisoctyladipate, diisopropyltin bisbenzyladipate, dihexyltin bismethyladipate, dihexyltin bis-2-ethylhexanate, dihexyltin bismethyladipate, dihexyltin bisbenzyladipate, di-2-ethylhexyltin bismethyladipate, di-2-ethylhexyltin bis-2-ethylhexanate, di-2-ethylhexyltin bisoctyladipate, di-2-ethylhexyltin bisbenzyladipate, dioctyltin bismethyladipate, dioctyltin bis-2-ethylhexanate, dioctyltin bisoctyladipate, dioctyltin bisbenzyladipate, distearyltin bismethyladipate, distearyltin bis-2-ethylhexanate, distearyltin bisoctyladipate, distearyltin bisbenzyladipate, dibenzyltin bismethyladipate, dibenzyltin bis-2-ethylhexanate, dibenzyltin bisoctyladipate, and dibenzyltin bisbenzyladipate.

Examples of the compound represented by formula (VIII) include diphenyltin malate, di-n-butyltin malate, di-t-butyltin malate, diisobutyltin malate, diisopropyltin malate, dihexyltin malate, di-2-ethylhexyltin malate, dioctyltin malate, distearyltin malate, dibenzyltin malate, diphenyltin adipate, di-n-butyltin adipate, di-t-butyltin adipate, diisobutyltin adipate, diisopropyltin adipate, dihexyltin diacetate, di-2-ethylhexyltin adipate, dioctyltin adipate, distearyltin adipate, and dibenzyltin adipate.

-Compound (h)-

Compound (h) is a compound including an N-substituted aminoketone, an N-substituted aminothioketone, an N-substituted aminoaldehyde, an N-substituted aminothioaldehyde, or a compound having a -C-(=M)-N< bond in the molecule (where M represents an oxygen atom or a sulfur atom).

Examples of compound (h) include N-substituted aminoketones such as 4-dimethylaminoacetophenone, 4-diethylaminoacetophenone, 1,3-bis(diphenylamino)-2-propanone, 1,7-bis(methylethylamino)-4-heptanone, 4-dimethylaminobenzophenone, 4-di-t-butylaminobenzophenone, 4-diphenylaminobenzophenone, 4,4'-bis(dimethylamino)benzophenone, 4,4'-bis(diethylamino)-benzophenone, and 4,4'-bis(diphenylamino)benzophenone; N-substituted aminothioketones corresponding to the N-substituted aminoketones; N-substituted aminoaldehydes such as 4-dimethylaminobenzaldehyde, 4-diphenylaminobenzaldehyde and 4-divinylaminobenzaldehyde; N-substituted aminothioaldehydes corresponding to the N-substituted aminoaldehydes; and compounds having a -C-(=M)-N< bond in the molecule (where M represents an oxygen atom or a sulfur atom), examples of which include N-substituted lactams such as N-methyl-β-propiolactam, N-phenyl-β-propiolactam, N-methyl-2-pyrrolidone, N-phenyl-2-pyrrolidone, N-t-butyl-2-pyrrolidone, N-phenyl-5-methyl-2-pyrrolidone, N-methyl-2-piperidone, N-phenyl-2-piperidone, N-methyl-ε-caprolactam, N-phenyl-ε-caprolactam, N-methyl-ω-caprolactam, N-phenyl-ω-caprolactam, N-methyl-ω-laurylolactam, and N-vinyl-ω-laurylolactam; N-substituted thiolactams corresponding to the N-substituted lactams; N-substituted cyclic ureas such as 1,3-dimethylethyleneurea, 1,3-divinylethyleneurea, 1,3-diethyl-2-imidazolidinone, 1-methyl-3-ethyl-2-imidazolidinone and 1,3-dimethyl-2-imidazolidinone; and N-substituted cyclic thioureas corresponding to the N-substituted cyclic ureas.

-Compound (i)-

Compound (i) is a compound having an N=C- bond in the molecule. Examples of the compound having an N≡C- bond in the molecule include the following: organic cyano compounds represented by the general formula R-CN, such as 2-cyanopyridine, 3-cyanopyridine, and acrylonitrile; electrophilic compounds, representative examples of which are ketones, aldehydes, and epoxies, specifically benzaldehyde, benzophenone, 4-4'-bis(diethylamino)benzophenone, 3-glycidoxypropyltrimethoxysilane, and allyl glycidyl ether; and organic compounds including a vinyl group, such as propylene, 1-butene, 1-hexene, styrene, vinyl naphthalene, vinyl phosphate, vinyl acetate ether, vinyl pivaloate, vinyl trimethylsilane, and triethoxyvinylsilane.

-Compound (j)-

Compound (j) is a compound including a phosphoric acid residual group represented by general formula (IX).

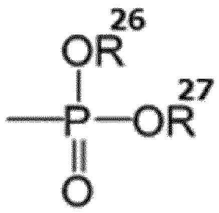

... (IX)

(In general formula (IX), $R^{26}$ and $R^{27}$ independently represent a straight or branched alkyl group having 1 to 20 carbon atoms, a monovalent hydrocarbon group selected from among monovalent alicyclic hydrocarbon groups having 3 to 20 carbon atoms and monovalent aromatic hydrocarbon groups having 6 to 20 carbon atoms, or a hydrogen atom.)

Examples of the phosphoric acid residual group represented by general formula (IX) include phosphoric acid residual groups represented by general formula (XI).

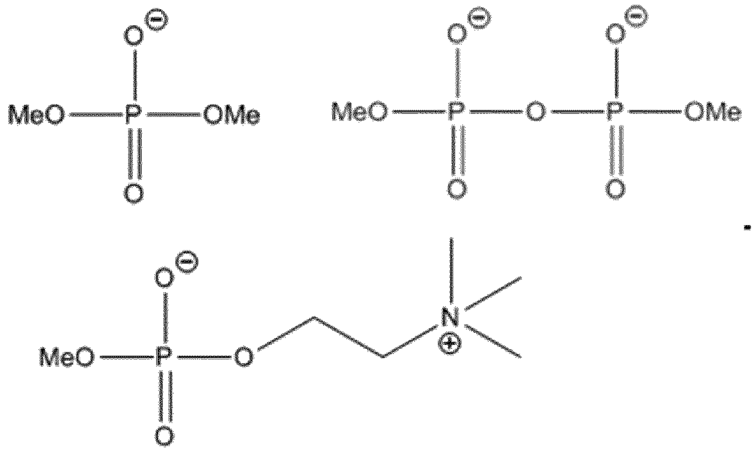

· · · (XI)

One of the compounds (a) to (j) may be used alone, or a mixture of two or more types may be used. The compounds (a) to (j) may also be used in combination with a modifying agent other than the compounds (a) to (j).

The modifying agent is preferably a compound that has a basic site. The basic site of the modifying agent can be introduced into the modified conjugated diene-based copolymer by the modification reaction to yield a modified conjugated diene-based polymer that has excellent interaction with a filler used in a rubber composition, such as carbon black, carbon fiber, or inorganic filler. Additionally, coloring of the modified conjugated diene-based polymer can be suppressed.

The basic site is not restricted but is preferably a functional group represented by formula (XII) from the perspective of interaction with the filler.

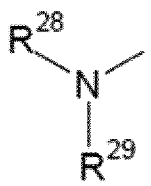

· · · (X I I)

In formula (XII), $R^{28}$ and $R^{29}$ independently represent a trimethoxysilyl group, a linear or branched alkyl group having 1 to 20 carbon atoms, a monovalent hydrocarbon group selected from among monovalent alicyclic hydrocarbon groups having 3 to 20 carbon atoms and monovalent aromatic hydrocarbon groups having 6 to 20 carbon atoms, or a hydrogen atom; and along with a bonded nitrogen atom, $R^{28}$ and $R^{29}$ may independently or together form a nitrogen containing heterocyclic group with three or more members.

The number of basic sites is not restricted but is preferably 1 to 5 and more preferably 1 to 3. When a plurality of basic sites is included, each may be the same or different.

As a modifying reactive group for the active organic metal site of the living terminal of the conjugated diene-based polymer, the modifying agent preferably includes at least one selected from the group consisting of a cyano group, a carbonyl group, an oxycarbonyl group, and an epoxy group (these functional groups also being referred to as "modifying

reactive groups"). The reason is that cyano groups, carbonyl groups, oxycarbonyl groups, and epoxy groups have particularly excellent reactivity with the active organic metal site of the living terminal of the conjugated diene-based polymer. Additionally, coloring of the modified conjugated diene-based polymer can be suppressed.

The number of modifying reactive groups in the modifying agent is not restricted but is preferably 1 to 5 and more preferably 1 to 3. When a plurality of modifying reactive groups is included, each may be the same or different.

The modifying agent preferably includes one or more of the functional groups represented by formula (XII) and one or more of the aforementioned modifying reactive groups. When the modifying agent includes one or more of the functional groups represented by formula (XII) and one or more of the aforementioned modifying reactive groups, the modifying agent exhibits excellent suppression of coloring of the modified conjugated diene-based polymer.

In the chemical structure of the modifying agent, the functional groups represented by formula (XII) and the modifying reactive group may be bonded directly or be bonded via one or more carbon atoms and/or nitrogen atoms. The one or more functional groups represented by formula (XII) and the one or more modifying reactive groups may be bonded directly or be bonded via one or more carbon atoms and/or nitrogen atoms to form an alicyclic structure or a nitrogen or oxygen containing heterocyclic structure.

To improve the suppression of coloring, the modifying agent preferably has a structure in which conjugation is not attained after the modification reaction. In other words, the modifying agent preferably either does not include an aromatic ring in the chemical structure, or when including an aromatic ring in the chemical structure, the aromatic ring is preferably located away from the modifying reactive group.

The modifying agent that includes at least one selected from the group consisting of a functional group represented by formula (XII), a cyano group, a carbonyl group, an oxycarbonyl group, and an epoxy group is not restricted, and commercially available compounds and the like may be used. These modifying agents may be used alone or in a combination of two or more types.

Examples of commercially available modifying agents include adiponitrile, 2-aminobenzonitrile, 3-aminobenzonitrile, 4-aminobenzonitrile, 3-aminocrotononitrile, diaminomaleonitrile, DL-proline, 3-anilininopropionitrile, (dimethylamino)acetonitrile, N-acetylimidazole, ethyl 4-amino-1-piperidinecarboxylate, 1-(cyanoacetyl)piperidine, epsilon-caprolactam, laurolactam, 2-amino-1,1,3-tricyano-1-propene, 4-(aminomethyl)-1-tert-butoxycarbonylpiperidine, butyl 4-aminobenzoate, 1,3-dimethyluracil, ethyl 4-piperidinecarboxylate, ethyl 2-piperidinecarboxylate, hydantoin, isonipecotamide, 1-[3-(trimethoxysilyl)propyl]urea, N-[3-(dimethylamino)propyl]lauramide, ethylene glycol bis(propionitrile) ether, 3,3'-iminodipropionitrile, 2-methylglutaronitrile, m-xylylene dicyanide, 1,3,6-hexanetricarbonitrile, 5-ketohexane nitrile, N-(3-aminopropyl)-2-pyrrolidinone, 2-(3-aminopropyl)cyclopentanone, 2,3-dimethyl-1-phenyl-5-pyrazolone, 3-methyl-2-oxazolidinone, 5-bromouracil, 2-imino-1-methyl-4-imidazolidinone, 2-oxazolidinone, 3,4-diaminobenzhydrazide, 4-ethyl-4-methyl-2,6-dioxo-3,5-piperidine dicarbonitrile, diethyl-pyrazole-3,5-dicarboxylate, 1-piperidinecarboxamide, 1,3,5-triazinan-2,6-dione, 2-pyrrolidone, 2-imidazolidinone, 4-pyridinecarboxamide, 1-methyl-2,4-imidazolindione, 5-methyl-2,4-imidazolindione, 1,3,5-tris(trimethoxysilylpropyl)triazinan-2,4,6-trione, 1,2,4-triazolidine-3,5-dione, pyrimidine-2,4(1H,3H)-dione, and 2-piperidinone.

Here, the amount of the modifying agent used in component (A-1) or component (A-2) of the polymerization catalyst composition differs in accordance with the retention rate of the active site of the conjugated diene-based polymer terminal to be modified but is preferably 0.1 to 100, more preferably 1.0 to 50, as a molar ratio. When the amount of the modifying agent is within the aforementioned ranges, the modification reaction progresses better, making it possible to obtain a polymer that does not generate toluene insolubles (gel) and that has a low heat generating property and excellent wear resistance.

The modification reaction in the present disclosure may be either a solution reaction or a solid phase reaction, but a solution reaction is preferable. The solution may include the unreacted monomer used for polymerization. The type of modification reaction is not restricted. A batch reactor may be used, or the modification reaction may be continuously carried out with a multistage continuous reactor, an inline mixer, or the like.

The reaction temperature in the modification reaction process is not restricted and may be appropriately selected according to the purpose. The temperature is, however, preferably 50°C to 150°C, more preferably 65°C to 95°C, and particularly preferably 70°C to 90°C. The polymer may degrade at high temperatures, whereas the reaction rate may decrease at low temperatures.

The reaction pressure in the modification reaction process is not restricted and may be appropriately selected according to the purpose. For example, the reaction pressure may be normal pressure.

The time required for the modification reaction is not restricted, and may be appropriately selected according to the purpose, but is preferably in the range of 0.5 minute to 2 hours, more preferably 3 minutes to 1 hour, under stirring.

<Monomer Preparation Process>

The monomer preparation process is a process of preparing the above-described conjugated diene monomer as a monomeric substance (monomer).

<Catalyst System Preparation Process>

The catalyst system preparation process is a process of preparing the above-described predetermined polymerization catalyst composition.

<Other Processes>

After the modification reaction process, a desolvation treatment process, water treatment process, heat treatment process, polymer isolation process, or the like may be performed as necessary.

The reagents used in each of the aforementioned processes (polymerization reaction process, organic metal compound adding process, modification reaction process, monomer preparation process, catalyst system preparation process) may be used without a solvent, or with solvents appropriate for the various reagents.

In each of the aforementioned processes, the reagents and the solvents are preferably used after appropriate purification such as distillation, degassing, and freeze drying.

Each of the aforementioned processes, in particular the catalyst system preparation process, polymerization reaction process, organic metal compound adding process, cooling process, and modifying reaction process are preferably performed under an inert gas atmosphere, such as nitrogen gas or argon gas.

The method, according to the present disclosure, of producing a modified conjugated diene-based polymer is not limited to the method of the above embodiment. For example, in the method of the above embodiment, the cyclopentadiene or the like (component (B-1)) in the second polymerization catalyst composition may be omitted from the polymerization catalyst composition used in the catalyst system preparation process and included instead in the polymerization reaction process.

(Modified Conjugated Diene-Based Polymer)

The modified conjugated diene-based polymer according to an embodiment of the present disclosure (modified conjugated diene-based polymer according to an embodiment) is produced by the method of producing a modified conjugated diene-based polymer according to an embodiment of the present disclosure. Consequently, the modified conjugated diene-based polymer according to an embodiment can have a high modification rate and a high cis-1,4 bond content.

In the present disclosure, a high modification rate refers to a modification rate of 50% or more, preferably 60% or more, and more preferably 70% or more. In the present disclosure, a high 1,4-cis bond content refers to a 1,4-cis bond content of 90% or more, preferably 95% or more, and more preferably 97% or more.

The units derived from the conjugated diene in the modified conjugated diene-based polymer according to an embodiment have an extremely high cis-1,4 bond content. Therefore, a highly-elastic copolymer can be provided and can be suitably used as a rubber component in a rubber composition.

The modified conjugated diene-based polymer according to an embodiment of the present disclosure also has an extremely high modification rate and can therefore provide a rubber composition with excellent wear resistance and low heat generating properties when used as a rubber component.

The cis-1,4 bond content of the units derived from the conjugated diene in the modified conjugated diene-based polymer according to an embodiment is not restricted and may be appropriately selected according to the purpose, but the cis-1,4 bond content is preferably 95% or more, more preferably 97% or more, and even more preferably 98% or more. As the cis-1,4 bond content of the units derived from the conjugated diene in the modified conjugated diene-based polymer is higher, the elongation-induced crystallization ability of the modified conjugated diene-based polymer can be increased, and the elasticity of the modified conjugated diene-based polymer can be increased.

The trans-1,4 bond content of the units derived from the conjugated diene in the modified conjugated diene-based polymer is not restricted and may be appropriately selected according to the purpose, but the trans-1,4 bond content is preferably less than 5%, more preferably less than 3%, and even more preferably less than 1%. As the trans-1,4 bond content of the units derived from the conjugated diene in the modified conjugated diene-based polymer is lower, the elongation-induced crystallization ability of the modified conjugated diene-based polymer can be increased, and the elasticity of the copolymer can be increased.

The 1,2-vinyl bond content of the units derived from the conjugated diene in the modified conjugated diene-based polymer is not restricted and may be appropriately selected according to the purpose, but the 1,2-vinyl bond content is preferably 5% or less, more preferably 3% or less, and even more preferably 1% or less. As the 1,2-vinyl bond content of the units derived from the conjugated diene in the modified conjugated diene-based polymer is lower, the elongation-induced crystallization ability of the modified conjugated diene-based polymer can be increased, and the elasticity of the modified conjugated diene-based polymer can be increased.

The 3,4-vinyl bond content of the units derived from the conjugated diene in the modified conjugated diene-based polymer is not restricted and may be appropriately selected according to the purpose, but the 3,4-vinyl bond content is preferably 5% or less, more preferably 3% or less, and even more preferably 1% or less. As the 3,4-vinyl bond content of the units derived from the conjugated diene in the modified conjugated diene-based polymer is lower, the elongation-induced crystallization ability of the modified conjugated diene-based polymer can be increased, and the elasticity of the modified conjugated diene-based polymer can be increased.

The number-average molecular weight (Mn) of the modified conjugated diene-based polymer is not restricted, and may be appropriately selected according to the purpose, but is preferably 100,000 or more and more preferably 200,000 or more.

The molecular weight distribution (Mw/Mn) of the modified conjugated diene-based polymer is not restricted, and may be appropriately selected according to the purpose, but is preferably 3.0 or less and more preferably 2.5 or less.

(Rubber Composition)

A rubber composition according to an embodiment of the present disclosure (rubber composition according to an embodiment) needs to include the modified conjugated diene-based polymer according to an embodiment of the present disclosure and may further include a filler, a crosslinking agent, and other components according to the purpose. The modified conjugated diene-based polymer according to an embodiment of the present disclosure can be a rubber component.

By inclusion of the modified conjugated diene-based polymer according to an embodiment, the rubber composition according to an embodiment can achieve excellent wear resistance and low heat generating properties.

The blending amount (content) of the modified conjugated diene polymer in the rubber component is not restricted, and may be appropriately selected according to the purpose, but is preferably 15 mass% to 100 mass%.

The modified conjugated diene polymer can sufficiently exhibit the characteristics thereof when the blending amount of the modified conjugated diene polymer in the rubber component is 15 mass% or more.

The rubber composition according to an embodiment may include a rubber component other than the modified conjugated diene-based polymer of the above embodiment. Such rubber components are not restricted and may be appropriately selected according to the purpose.

Conjugated diene-based polymers that can be used as the rubber component are not restricted and may be appropriately selected according to the purpose. Examples include natural rubber, isoprene rubber (BR), styrene-butadiene rubber (SBR), and acrylonitrile-butadiene rubber (NBR). Natural rubber and/or isoprene rubber (BR) are preferable to improve the properties of the rubber composition and rubber products including the rubber composition.

Other rubber components, such as ethylene-propylene rubber (EPM), ethylene-propylene-nonconjugated diene rubber (EPDM), polysulfide rubber, silicone rubber, fluororubber, urethane rubber, or an isoprene copolymer, may be used in addition to or instead of the conjugated diene-based polymer as the aforementioned rubber component. These rubber components may be used alone or in a combination of two or more types.

The filler is not restricted and may be appropriately selected according to the purpose. Examples of the filler include carbon black and inorganic fillers, and the filler is preferably at least one selected from carbon black and inorganic fillers. The rubber composition more preferably contains carbon black. The filler is added to the rubber composition for better reinforcement or the like.

The blending amount (content) of the filler is not restricted, and may be appropriately selected according to the purpose, but is preferably in the range of 10 to 100 parts by mass, more preferably 20 to 80 parts by mass, and even more preferably 30 to 60 parts by mass, per 100 parts by mass of the rubber component.

The effects of adding the filler are obtained when the content of the filler is 10 parts by mass or more, and the filler can be sufficiently mixed into the rubber component and can improve the performance of the rubber composition when the content of the filler is 100 parts by mass or less.

Setting the content of the filler to be within the more preferable range, or the even more preferable range, is advantageous in terms of the balance between workability and low loss property and between workability and durability.

The inorganic filler is not restricted and may be appropriately selected according to the purpose. Examples include silica, aluminum hydroxide, clay, alumina, talc, mica, kaolin, glass balloon, glass beads, calcium carbonate, magnesium carbonate, magnesium hydroxide, calcium hydroxide, magnesium oxide, titanium oxide, potassium titanate, and barium sulfate. These inorganic fillers may be used alone or in a combination of two or more types.

When an inorganic filler is used, a silane coupling agent may also be used as appropriate.

The crosslinking agent is not restricted and may be appropriately selected according to the purpose. Examples include a sulfur-containing crosslinking agent, an organic peroxide-containing crosslinking agent, an inorganic crosslinking agent, a polyamine crosslinking agent, a resin crosslinking agent, a sulfur compound-based crosslinking agent, and an oxime-nitrosamine-based crosslinking agent, with the sulfur-containing crosslinking agent being more preferable in the rubber composition for a tire.

The content of the crosslinking agent is not restricted, and may be appropriately selected according to the

purpose, but is preferably 0.1 to 20 parts by mass per 100 parts by mass of the rubber component.

When the crosslinking agent content is less than 0.1 parts by mass, the crosslinking may be insufficient. When the crosslinking agent content exceeds 20 parts by mass, the crosslinking may tend to proceed during kneading as a result of some crosslinking agents, and the physical properties of the crosslinked product may be impaired.

A vulcanization accelerator or the like may also be used with the rubber composition of the present disclosure. As the vulcanization accelerator, compounds which are guadinine-based, aldehyde-amine-based, aldehyde-ammonia-based, thiazole-based, sulfenamide-based, thiourea-based, thiuram-based, dithiocarbamate-based, xanthate-based, or the like may be used.

As necessary, any known agent such as a softener, a vulcanizing co-agent, a colorant, a flame retardant, a lubricant, a foaming agent, a plasticizer, a processing aid, an antioxidant, an age resistor, an anti-scorch agent, an ultraviolet ray protecting agent, an antistatic agent, a color protecting agent, and other compounding agents may be included according to the intended use.

The rubber composition according to an embodiment can be produced by a method known to those of ordinary skill in the art using the aforementioned components.

(Crosslinked Rubber Composition)

A crosslinked rubber composition of the present disclosure can be obtained by crosslinking the rubber composition according to an embodiment of the present disclosure. The crosslinked rubber composition of the present disclosure includes the modified conjugated diene-based polymer according to an embodiment of the present disclosure as a rubber component and therefore has excellent low heat generating properties and wear resistance.

The crosslinking conditions are not restricted and may be appropriately selected according to the purpose, but the heating temperature is preferably 120°C to 200°C, and the heating time is preferably 1 minute to 900 minutes.

(Tire)

A tire according to an embodiment of the present disclosure (tire according to an embodiment) needs to include at least one selected from the rubber composition according to an embodiment of the present disclosure and the crosslinked rubber composition according to an embodiment of the present disclosure. At least one of the members of the tire according to an embodiment can be configured to include the rubber composition according to an embodiment.

Inclusion of at least one selected from the rubber composition according to an embodiment and the crosslinked rubber composition according to an embodiment provides the tire according to an embodiment with excellent wear resistance and low heat generating properties.

The tire according to an embodiment can be produced by a method known to those of ordinary skill in the art.

Rubber products other than tires, such as footwear, anti-vibration rubber, seismic isolation rubber, belts, rubber crawlers, various hoses, flooring, and the like can also be produced using the rubber composition according to an embodiment of the present disclosure.

EXAMPLES

The present disclosure is described below in detail with reference to Examples. However, the present disclosure is in no way limited to the following Examples.

(Production of Modified Conjugated Diene-Based Polymer)

Modified conjugated diene-based polymers were produced as follows.

(Example 1-1)

To a 1L pressure-resistant glass reactor that had been thoroughly dried and purged with nitrogen, 130 g of a cyclohexane solution including 30 g of 1,3-butadiene was added. Meanwhile, in a glovebox under a nitrogen atmosphere, 175.5 μmol of trisbistrimethylsilylamide gadolinium [$Gd[N(SiMe_3)_2]_3$] (component (A-1)), 351 μmol of 1-benzylindene (1-benzyl-1H-indene) (component (B-1)), 8.7 mmol of triisobutyl aluminum (TIBAL) (component (C)), and 3.5 mmol of diisobutyl aluminum hydride (DIBAL) (component (C)) were mixed in a glass container and allowed to stand for 12 hours. Subsequently, 5.55 mL of MMAO (MMAO-3A manufactured by Tosoh Finechem Corporation) (component (D)) and 50 mL of cyclohexane were added and mixed, and the result was allowed to stand for 6 hours. Subsequently, 350 μL of diethyl aluminum chloride (DEAC) (component (E-1)) was added to obtain a preparatory catalyst solution (polymerization catalyst composition). The catalyst solution was then taken out from the glovebox and added to the monomer solution

in an amount of 15 μmol by gadolinium conversion. Polymerization was then conducted at 80°C for 60 minutes. After the polymerization, 3 mmol of diisobutyl aluminum hydride was added as an organic metal compound, and the reaction system was cooled to 35°C. Then, 20 mol of 2-cyanopyridine was added as a modifying agent and reacted for 1 hour at 80°C. Subsequently, 1.5 mL of an isopropanol solution including 5 mass% of 2,2'-methylene-bis(4-ethyl-6-t-butylphenol) (NOCRAC NS-5 manufactured by Ouchi Shinko Chemical Industrial Co., Ltd.) was added to terminate the reaction. The modified conjugated diene polymer was separated with a large amount of isopropanol (IPA) and vacuum dried at 60°C to obtain a modified polymer A. The yield of the modified polymer A thus obtained was 30 g.

(Example 1-2)

Preparation of the catalyst solution (polymerization catalyst composition), the polymerization reaction, and the modification reaction were carried out in the same way as in Example 1-1, except for using adiponitrile (ADN) instead of 2-cyanopyridine as the modifying agent, to obtain a modified polymer B. The yield of the modified polymer B thus obtained was 30 g.

(Example 1-3)

Preparation of the catalyst solution (polymerization catalyst composition), the polymerization reaction, and the modification reaction were carried out in the same way as in Example 1-1, except for using 3-aminobenzonitrile (3ABN) instead of 2-cyanopyridine as the modifying agent, to obtain a modified polymer C. The yield of the modified polymer C thus obtained was 30 g.

(Example 2-1)

Preparation of the catalyst solution (polymerization catalyst composition), the polymerization reaction, and the modification reaction were carried out in the same way as in Example 1-1, except for using isoprene instead of 1,3-butadiene as the conjugated diene monomer, to obtain a modified polymer D. The yield of the modified polymer D thus obtained was 30 g.

(Example 2-2)

Preparation of the catalyst solution (polymerization catalyst composition), the polymerization reaction, and the modification reaction were carried out in the same way as in Example 2-1, except for using adiponitrile (ADN) instead of 2-cyanopyridine as the modifying agent, to obtain a modified polymer E. The yield of the modified polymer E thus obtained was 30 g.

(Example 2-3)

Preparation of the catalyst solution (polymerization catalyst composition), the polymerization reaction, and the modification reaction were carried out in the same way as in Example 2-1, except for using 3-aminobenzonitrile (3ABN) instead of 2-cyanopyridine as the modifying agent, to obtain a modified polymer F. The yield of the modified polymer F thus obtained was 30 g.

(Comparative Example 1-1)

Preparation of the catalyst solution (polymerization catalyst composition), the polymerization reaction, and the modification reaction were carried out in the same way as in Example 1-1, except for not adding diisobutyl aluminum hydride as an organic metal compound after the polymerization reaction, to obtain a modified polymer a. The yield of the modified polymer a thus obtained was 30 g.

(Comparative Example 1-2)

Preparation of the catalyst solution (polymerization catalyst composition), the polymerization reaction, and the modification reaction were carried out in the same way as in Comparative Example 1-1, except for not adding 2-cyanopyridine as a modifying agent, to obtain an unmodified polymer b. The yield of the unmodified polymer b thus obtained was 30 g.

(Comparative Example 2-1)

Preparation of the catalyst solution (polymerization catalyst composition), the polymerization reaction, and the modification reaction were carried out in the same way as in Example 2-1, except for not adding diisobutyl aluminum hydride as an organic metal compound after the polymerization reaction, to obtain a modified polymer c. The yield of the modified polymer c thus obtained was 30 g.

(Comparative Example 2-2)

Preparation of the catalyst solution (polymerization catalyst composition), the polymerization reaction, and the modification reaction were carried out in the same way as in Comparative Example 2-1, except for not adding 2-cyanopyridine as a modifying agent, to obtain an unmodified polymer d. The yield of the unmodified polymer d thus obtained was 30 g.

Table 1 lists details on the preparation of the polymerization catalyst composition in the Examples and Comparative Examples and the production of the (un)modified conjugated diene-based polymers.

(Properties of Modified Conjugated Diene-Based Polymer)

Analyses (1) to (3) below were performed on each of the polymers obtained as above to evaluate the properties thereof.

(1) Analysis of Microstructure (Cis-1,4 Bond Content)

An NMR spectrum was obtained for each polymer using an NMR (AVANCE 600, manufactured by Bruker). The cis-1,4 bond content (%) was determined from the integration ratio of the peaks obtained by $^{1}$H-NMR and $^{13}$C-NMR measurement ($^{1}$H-NMR: $\delta$ 4.6-4.8 (=$CH_2$ of 3,4-vinyl unit), 5.0-5.2 (-CH= of 1,4-unit), $^{13}$C-NMR: $\delta$ 23.4 (1,4-cis unit), 15.9 (1,4-trans unit), 18.6 (3,4-unit)).

(2) Analysis of Number-Average Molecular Weight (Mn) and Molecular Weight Distribution (Mw/Mn)

A polystyrene equivalent number-average molecular weight (Mn) and molecular weight distribution (Mw/Mn) of each of the modified polymers were calculated through gel permeation chromatography (GPC) (GPC apparatus: HLC-8220GPC manufactured by Tosoh Corporation; column: two of TSKgel $GMH_{XL}$, manufactured by Tosoh Corporation; detector: a differential refractometer (RI)), using monodisperse polystyrene as a reference. The measurement temperature was 40°C, and the elution solvent was THF.

(3) Terminal Modification Rate (%)

The terminal modification rate is now described in detail with reference to FIG. 1.

The vertical axis of FIG. 1 indicates the UV/RI value obtained by gel permeation chromatography (GPC) measurement. UV represents the peak area obtained by the UV absorbance due to the modifying agent that reacted with the polymer, and RI represents the peak area obtained by the differential refractive index (RI) of the polymer itself. The horizontal axis of FIG. 1 represents the value of $(1/Mn) \times 10^3$, and Mn represents the absolute molecular weight (number-average molecular weight).

LowCisBR in FIG. 1 is the result of polymerization by anionic polymerization with an Li-based catalyst and modification by the modifying agent 4,4'-bis(diethylamino benzophenone) (DEAB). The UV/RI value of three types of polymers with different absolute Mn values were plotted and could be approximated as a straight line. In the case of anionic polymerization, 100% modification is achieved. Therefore, the UV/RI of LowCisBR is represented by A in the following equation as a percentage.

$$UV(Li\text{-}Br)/RI(Li\text{-}Br) = A$$

On the other hand, HighCisBR is the result of using a catalyst including a compound containing a lanthanum series rare earth element (Nd), i.e. coordination polymerization, and then modifying with DEAB. The UV/RI value of five types of polymers with different absolute Mn values were plotted for HighCisBR as well and could be approximated as a straight line in the same way as above. In the case of coordination polymerization, a portion ceases to be living during

the polymerization, making it difficult to achieve 100% modification. In the following equation, the UV/RI of HighCisBR is represented as B.

$$UV(Nd\text{-}Br)/RI(Nd\text{-}Br) = B$$

The terminal modification rate in the present disclosure is defined as follows.

$$\text{Terminal modification rate} = (B/A) \times 100\ (\%)$$

The terminal modification rate in the present disclosure is calculated from the A and B values obtained using LowCisBR with the same absolute molecular weight (number-average molecular weight) as the HighCisBR.
The terminal modification rate of an unmodified polymer reacted with isopropanol was considered to be 0%, and the UV/RI value after subtracting the value of the unmodified line in FIG. 1 was used as the true value. FIG. 1 illustrates the A and B values.
The three lines in FIG. 1 can be used as a calibration curve. For example, the terminal modification rate can be calculated if the absolute molecular weight Mn of the HighCisBR is known.
The terminal modification rate decreases as the absolute molecular weight Mn increases, as can be seen from FIG. 1, and modification with the modifying agent becomes difficult.
The calibration curve needs to be created each time the modifying agent changes.

(4) Colorability

The color of the resulting polymers was judged visually under fluorescent light. The color of the unmodified polymer b of Comparative Example 1-2 and of the unmodified polymer d of Comparative Example 2-2 was used as a reference for "colorless". "Colorless" was recorded in the case of a similar color tone as the reference, whereas the visually judged color was recorded in the case of a different color tone from the reference.

(Production and Evaluation of Rubber Composition)

Rubber compositions were produced by an ordinary method using the following: 100 parts by mass of the polymers obtained in the Examples and Comparative Examples, 25 parts by mass of carbon black, 25 parts by mass of silica, 2 parts by mass of stearic acid, 1 part by mass of wax, 1 part by mass of an age resistor (NOCRAC NS-5 manufactured by Ouchi Shinko Chemical Industrial Co., Ltd.), 3 parts by mass of zinc oxide, a vulcanization accelerator (NOCCELER CZ-G manufactured by Ouchi Shinko Chemical Industrial Co., Ltd.), and 1.2 parts by mass of sulfur. Next, each rubber composition was vulcanized (crosslinked) at 145°C for 30 minutes. The properties of the resulting crosslinked rubber compositions were evaluated by performing the tests in (5) and (6) below.

(5) Wear Resistance

In accordance with JIS K6264-2:2005, a Lambourn abrasion tester was used, and the amount of wear at a slip rate of 60% was measured at room temperature.
The evaluation of the measured values is listed as an index, with the inverse of Comparative Example 1 being 100. A larger index represents less wear and better wear resistance.

(6) Low Heat Generating Property

The loss tangent (tanδ) was measured using a spectrometer manufactured by Toyo Seiki Co., Ltd., with an initial load of 100 g, a strain of 2%, a measurement frequency of 50 Hz, and measurement temperatures of 25°C and 60°C.
The evaluation of the measured values is listed as an index, with the loss tangent (tanδ) of Comparative Example 1 being 100. A smaller index indicates a lower heat generation property (lower loss property).
The case of non-measurement is indicated as ND.
Tables 1 and 2 list details on the analysis results of the (un)modified conjugated diene-based polymers obtained in the Examples and the Comparative Examples and the properties of the rubber compositions including the (un)modified conjugated diene-based polymers.

[Table 1]

| | | | | Example 1-1 | Example 1-2 | Example 1-3 | Comparative Example 1-1 | Comparative Example 1-2 |
|---|---|---|---|---|---|---|---|---|
| Method of producing (un)modified polymers | Conjugated diene monomer | | | 1,3-butadiene | 1,3-butadiene | 1,3-butadiene | 1,3-butadiene | 1,3-butadiene |
| | Modifying agent | | | 2-cyanopyridine | adiponitrile | 3-aminobenzonitrile | 2-cyanopyridine | - |
| | Polymerization catalyst composition | Component (A-1) | Rare earth element compound | $Gd[N(SiMe_3)_2]_3]$ | $Gd[N(SiMe_3)_2]_3]$ | $Gd[N(SiMe_3)_2]_3]$ | $Gd[N(SiMe_3)_2]_3]$ | $Gd[N(SiMe_3)_2]_3]$ |
| | | Component (B-1) | Compound having a cyclopentadiene skeleton | 1-benzylindene | 1-benzylindene | 1-benzylindene | 1-benzylindene | 1-benzylindene |
| | | Component (C) | Organic metal compound | TIBAL/DIBAL | TIBAL/DIBAL | TIBAL/DIBAL | TIBAL/DIBAL | TIBAL/DIBAL |
| | | Component (D) | Aluminoxane compound | MMAO | MMAO | MMAO | MMAO | MMAO |
| | | Component (E) | Halogen compound | DEAC | DEAC | DEAC | DEAC | DEAC |
| | | Component (F) | Ionic compound | diethyl aluminum chloride | diethyl aluminum chloride | diethyl aluminum chloride | diethyl aluminum chloride | diethyl aluminum chloride |
| | Polymerization reaction process | Catalyst amount (μmol) | | 15 | 15 | 15 | 15 | 15 |
| | | Reaction temperature (°C) | | 80 | 80 | 80 | 80 | 80 |
| | | Reaction pressure (atm) | | normal pressure | normal pressure | normal pressure | normal pressure | normal pressure |
| | | Reaction time (min) | | 60 | 60 | 60 | 60 | 60 |
| | Organic metal compound adding process | Organic metal compound | | DIBAL | DIBAL | DIBAL | - | - |

(continued)

| | | | Example 1-1 | Example 1-2 | Example 1-3 | Comparative Example 1-1 | Comparative Example 1-2 |
|---|---|---|---|---|---|---|---|
| | Modification reaction process | Reaction temperature (°C) | 80 | 80 | 80 | 80 | 80 |
| | | Reaction pressure (atm) | normal pressure | normal pressure | normal pressure | normal pressure | normal pressure |
| | | Reaction time (min) | 60 | 60 | 60 | 60 | 60 |
| | Modified polymer | | modified polymer A | modified polymer B | modified polymer C | modified polymer a | unmodified polymer b |
| Analysis results of (un)modified polymers | Yield (g) | | 30 | 30 | 30 | 30 | 30 |
| | Yield (%) | | 100 | 100 | 100 | 100 | 100 |
| | Cis-1,4-bond content of conjugated diene portion (%) | | 99.89 | 99.89 | 99.89 | 99.89 | 99.89 |
| | Terminal modification rate (%) | | 80 | 80 | 80 | 54 | 0 |
| | Number-average molecular weight ($\times 10^3$) (Mn) | | 230 | 240 | 240 | 230 | 230 |
| | Molecular weight distribution (Mw/Mn) | | 2.08 | 2.08 | 2.07 | 2.05 | 2.05 |
| | Color of polymer | | yellowish-brown | colorless | colorless | yellowish-brown | colorless |
| Evaluation of rubber compositions | Wear resistance | | 140 | 105 | 110 | 120 | 100 |
| | Low heat generating property | | 75 | 84 | 84 | 86 | 100 |

[Table 2]

| | | | | Example 2-1 | Example 2-2 | Example 2-3 | Comparative Example 2-1 | Comparative Example 2-2 |
|---|---|---|---|---|---|---|---|---|
| Method of producing (un)modified polymers | Conjugated diene monomer | | | isoprene | isoprene | isoprene | isoprene | isoprene |
| | Modifying agent | | | 2-cyanopyridine | adiponitrile | 3-aminobenzonitrile | 2-cyanopyridine | - |
| | Polymerization catalyst composition | Component (A-1) | Rare earth element compound | Gd[N$(SiMe_3)_2]_3$] | Gd[N$(SiMe_3)_2]_3$] | Gd[N$(SiMe_3)_2]_3$] | Gd[N$(SiMe_3)_2]_3$] | Gd[N$(SiMe_3)_2]_3$] |
| | | Component (B-1) | Compound having a cyclopentadiene skeleton | 1-benzylindene | 1-benzylindene | 1-benzylindene | 1-benzylindene | 1-benzylindene |
| | | Component (C) | Organic metal compound | TIBAL/DIBAL | TIBAL/DIBAL | TIBAL/DIBAL | TIBAL/DIBAL | TIBAL/DIBAL |
| | | Component (D) | Aluminoxane compound | MMAO | MMAO | MMAO | MMAO | MMAO |
| | | Component (E) | Halogen compound | DEAC | DEAC | DEAC | DEAC | DEAC |
| | | Component (F) | Ionic compound | diethyl aluminum chloride | diethyl aluminum chloride | diethyl aluminum chloride | diethyl aluminum chloride | diethyl aluminum chloride |
| | Polymerization reaction process | Catalyst amount (μmol) | | 15 | 15 | 15 | 15 | 15 |
| | | Reaction temperature (°C) | | 80 | 80 | 80 | 80 | 80 |
| | | Reaction pressure (atm) | | normal pressure | normal pressure | normal pressure | normal pressure | normal pressure |
| | | Reaction time (min) | | 60 | 60 | 60 | 60 | 60 |
| | Organic metal compound adding process | Organic metal compound | | DIBAL | DIBAL | DIBAL | - | - |

(continued)

| | | | Example 2-1 | Example 2-2 | Example 2-3 | Comparative Example 2-1 | Comparative Example 2-2 |
|---|---|---|---|---|---|---|---|
| | Modification reaction process | Reaction temperature (°C) | 80 | 80 | 80 | 80 | 80 |
| | | Reaction pressure (atm) | normal pressure | normal pressure | normal pressure | normal pressure | normal pressure |
| | | Reaction time (min) | 60 | 60 | 60 | 60 | 60 |
| | Modified polymer | | modified polymer D | modified polymer E | modified polymer F | modified polymer c | unmodified polymer d |
| Analysis results of (unmodified polymers | Yield (g) | | 30 | 30 | 30 | 30 | 30 |
| | Yield (%) | | 100 | 100 | 100 | 100 | 100 |
| | Cis-1,4- bond content of conjugated diene portion (%) | | 98.9 | 98.9 | 98.9 | 98.9 | 98.9 |
| | Terminal modification rate (%) | | 80 | 80 | 80 | 40 | 0 |
| | Number-average molecular weight ($\times 10^3$) (Mn) | | 730 | 700 | 720 | 730 | 720 |
| | Molecular weight distribution (Mw/Mn) | | 2.3 | 2.1 | 2.1 | 2.2 | 2 |
| | Color of polymer | | yellowish-brown | colorless | colorless | yellowish-brown | colorless |
| Evaluation of rubber compositions | Wear resistance | | ND | ND | ND | ND | ND |
| | Low heat generating property | | 80 | 95 | 95 | 90 | 100 |

As is clear from Tables 1 and 2, a modified conjugated diene-based polymer with a high modification rate and a high 1,4-cis bond content can easily be produced by adding an organic metal compound to a reaction system including the conjugated diene-based polymer obtained by polymerizing a conjugated diene monomer and then modifying the conjugated diene-based polymer in the reaction system with a modifying agent.

As is also clear from Tables 1 and 2, a rubber composition including the modified conjugated diene-based polymer with a high modification rate and a high 1,4-cis bond content produced in the Examples has excellent wear resistance and low heat generating properties.

It is also clear from Tables 1 and 2 that a modifying agent that has a basic site as a filler interaction site and a functional group as a polymer reaction site yielded no coloring, like Comparative Examples 1-2 and 2-2 in which a modifying agent was not used. Conversely, use of 2-cyanopyridine, which is a conventionally-used general-purpose modifying agent, yielded a yellowish-brown color, regardless of whether an organic metal compound was added after the polymerization reaction.

## INDUSTRIAL APPLICABILITY

The present disclosure can provide a method of producing a modified conjugated diene-based polymer that allows easy production of a modified conjugated diene-based polymer that has a high modification rate and a high 1,4-cis bond content.

The present disclosure can also provide a modified conjugated diene-based polymer that has a high modification rate and a high 1,4-cis bond content. The present disclosure can also provide a rubber composition and a crosslinked rubber composition that achieve the effects of the modified conjugated diene-based polymer of the present disclosure. The present disclosure can also provide a tire that achieves the effects of the modified conjugated diene-based polymer of the present disclosure.

## Claims

**1.** A method of producing a modified conjugated diene-based polymer, the method comprising:

a polymerization reaction process of polymerizing a conjugated diene monomer in the presence of a polymerization catalyst composition to obtain a conjugated diene-based polymer;
an organic metal compound adding process of adding an organic metal compound after the polymerization reaction process; and
a modification reaction process of modifying the conjugated diene-based polymer with a modifying agent after the organic metal compound adding process.

**2.** The method of producing a modified conjugated diene-based polymer of claim 1, wherein the polymerization catalyst composition comprises an organic metal compound represented by general formula (I):

$$YR^1_aR^2_bR^3_c \ldots \qquad (I),$$

where Y represents a metal element selected from the group consisting of elements of groups 1, 2, 12, and 13 of the periodic table; $R^1$ and $R^2$ each represent a hydrogen atom or a hydrocarbon group having 1 to 10 carbon atoms; $R^3$ represents a hydrocarbon group having 1 to 10 carbon atoms; $R^1$, $R^2$, and $R^3$ are identical or different; a is 1 and b and c are 0 when Y represents a metal element of group 1; a and b are 1 and c is 0 when Y represents a metal element of group 2 or group 12; and a, b, and c are 1 when Y represents a metal element of group 13.

**3.** The method of producing a modified conjugated diene-based polymer of claim 1 or 2, wherein the organic metal compound added in the organic metal compound adding process is represented by general formula (II):

$$YR^1_aR^2_bR^3_c \ldots \qquad (II),$$

where Y represents a metal element selected from the group consisting of elements of groups 1, 2, 12, and 13 of the periodic table; $R^1$ and $R^2$ each represent a hydrogen atom or a hydrocarbon group having 1 to 10 carbon atoms; $R^3$ represents a hydrocarbon group having 1 to 10 carbon atoms; $R^1$, $R^2$, and $R^3$ are identical or different; a is 1 and b and c are 0 when Y represents a metal element of group 1; a and b are 1 and c is 0 when Y represents a metal element of group 2 or group 12; and a, b, and c are 1 when Y represents a metal element of group 13.

4. The method of producing a modified conjugated diene-based polymer of claim 3, wherein in general formula (II), $R^1$ represents a hydrogen atom when Y represents a metal element of group 1; at least one of $R^1$ and $R^2$ represents a hydrogen atom when Y represents a metal element of group 2 or group 12; and at least one of $R^1$, $R^2$, and $R^3$ represents a hydrogen atom when Y represents a metal element of group 13.

5. The method of producing a modified conjugated diene-based polymer of any one of claims 1 to 4, wherein the modifying agent includes a basic site.

6. The method of producing a modified conjugated diene-based polymer of any one of claims 1 to 5, wherein the modifying agent comprises at least one selected from the group consisting of a cyano group, a carbonyl group, an oxycarbonyl group, and an epoxy group.

7. The method of producing a modified conjugated diene-based polymer of any one of claims 1 to 6, further comprising a cooling process of cooling a reaction system after the polymerization reaction process and before the modification reaction process.

8. A modified conjugated diene-based polymer produced by the method of any one of claims 1 to 7.

9. A rubber composition comprising the modified conjugated diene-based polymer of claim 8.

10. The rubber composition of claim 9, further comprising a natural rubber.

11. A tire comprising the rubber composition of claim 9 or 10.

FIG. 1

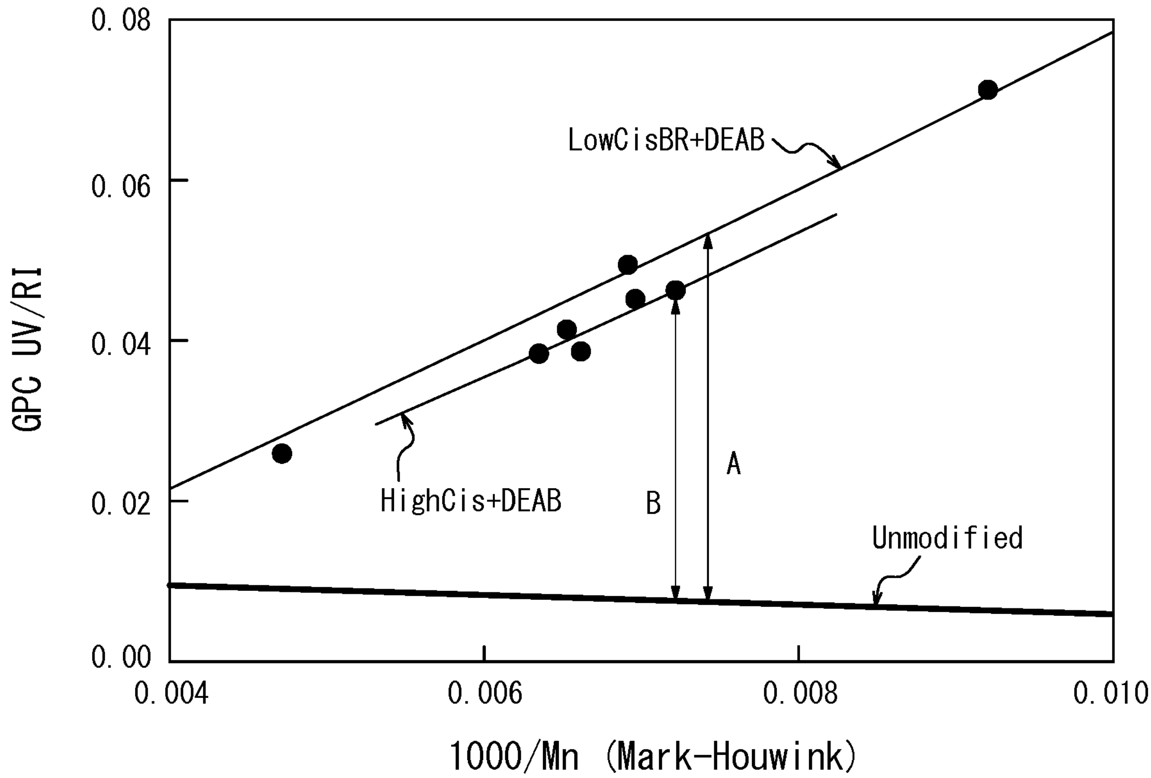
0.08
0.06
0.04
0.02
0.00
GPC UV/RI
0.004
0.006
0.008
0.010
1000/Mn (Mark-Houwink)
LowCisBR+DEAB
HighCis+DEAB
Unmodified
A
B

**INTERNATIONAL SEARCH REPORT**

International application No. PCT/JP2018/005807

A. CLASSIFICATION OF SUBJECT MATTER
Int.Cl. C08C19/00(2006.01)i, B60C1/00(2006.01)i, C08F4/52(2006.01)i, C08F4/602(2006.01)i, C08L7/00(2006.01)i, C08L15/00(2006.01)i

According to International Patent Classification (IPC) or to both national classification and IPC

B. FIELDS SEARCHED
Minimum documentation searched (classification system followed by classification symbols)
Int.Cl. C08C19/00-19/44, B60C1/00, C08F4/42-4/70, C08L7/00-21/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-139633 A (JSR CORPORATION) 22 May 2001, claims, paragraph [0068], example 2 (Family: none) | 1-2, 6-11 |
| X | JP 2002-502891 A (SHELL INT RESEARCH MIJ BV) 29 January 2002, claim 2, examples 4, 5 & US 6462143 B1, claim 10, examples 4, 5 & WO 1999/040121 A1 & EP 1042369 A1 | 1, 3, 5-6, 8-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10.04.2018 | 24.04.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/005807

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-344832 A (SOCIETE DE TECHNOLOGIE MICHELIN)) 12 December 2000, claims, paragraphs [0001], [0009], examples & US 6344524 B1, claims, column 1, lines 8-11, column 3, lines 16-18, examples & EP 1050545 A1 | 1, 3-6, 8-11 |
| X | JP 5-202102 A (ZEON CORPORATION) 10 August 1993, claims, paragraphs [0028], [0029], examples (Family: none) | 1-3, 5-6, 8-11 |
| X | JP 63-245405 A (JAPAN SYNTHETIC RUBBER CO., LTD.) 12 October 1988, claims, page 3, lower right column, line 10 to page 4, upper left column, line 13, examples (Family: none) | 1-3, 8-11 |
| X | WO 2016/027401 A1 (BRIDGESTONE CORPORATION) 25 February 2016, claims, paragraphs [0076]-[0086], examples & US 2017/0275400 A1, claims, paragraphs [0157]-[0181], examples & EP 3184554 A1 | 8-11 |
| A | WO 2014/050665 A1 (JSR CORPORATION) 03 April 2014, claims, example 3A & US 2015/0252133 A1, claims, example 3A & EP 2902415 A1 | 1-11 |
| A | JP 64-62341 A (JAPAN SYNTHETIC RUBBER CO., LTD.) 08 March 1989, claims, page 4, lower right column, line 19 to page 5, upper left column, line 10 (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013237868 A
- JP 2014058651 A


### Non-patent literature cited in the description


- *Organometallics,* 2004, vol. 23, 47784787